# EUROPEAN PATENT APPLICATION

(11) **EP 4 426 026 A1**
(43) Date of publication of application: **04.09.2024**
(21) Application number: 22887530.8
(22) Date of filing: 24.10.2022
(51) Int. Cl.: H04W 72/02, H04W 72/56, H04W 72/04, H04W 72/54, H04W 28/26, H04W 4/40, H04W 92/18

(54) **METHOD AND DEVICE FOR TRANSMITTING SIDELINK RESOURCE COORDINATION INFORMATION**

(30) Priority: 26.10.2021 KR 20210144031; 19.11.2021 KR 20210160560; 07.01.2022 KR 20220002905; 20.01.2022 KR 20220008716; 11.02.2022 KR 20220018384; 29.03.2022 KR 20220038958
(71) Applicant: Electronics and Telecommunications Research Institute, Daejeon 34129 (KR)
(72) Inventor: LEE, Jung Hoon, Daejeon 34129 (KR); KIM, Cheul Soon, Daejeon 34129 (KR); MOON, Sung Hyun, Daejeon 34129 (KR)
(74) Representative: Betten & Resch
(86) International application number: PCT/KR2022/016278
(87) International publication number: WO 2023/075334

(57) **Abstract**

An operation method of a first terminal performing sidelink communication may comprise the steps of: receiving resource coordination information from a second terminal; if the resource coordination information is information on preferred resource(s), selecting candidate resources to be used for transmission of the first terminal by preferentially considering the preferred resource(s); and if the resource coordination information is information on non-preferred resource(s), excluding the non-preferred resource(s) from the candidate resources to be used for transmission of the first terminal.

## Description

### [Technical Field]

The present disclosure relates to a sidelink communication technique, and more particularly, to a method for transmitting resource coordination information in sidelink communication, and an apparatus for the same.

### [Background Art]

In sidelink communication, even when resource allocation mode 2 is used, a terminal (i.e., coordinating terminal) that coordinates resources for data transmission and reception between terminals and transmits and receives information on the coordinated resources (i.e., resource coordination information) to a terminal (i.e., coordinated terminal) that needs to perform data transmission and reception may be configured similarly to a base station of resource allocation mode 1. Since the terminals perform data transmission and reception operations within the coordinated resources, occurrence of a collision between resources may be prevented, and performance can be improved accordingly. In addition, energy efficiency can be improved by the terminals performing sensing and selection operations within limited resources.

### [Disclosure]

### [Technical Problem]

The present disclosure is directed to providing a method for transmitting resource coordination information for sidelink communication.

The present disclosure is also directed to providing a configuration of an apparatus of performing the method for transmitting resource coordination information for sidelink communication.

### [Technical Solution]

According to an exemplary embodiment of the present disclosure for achieving the above-described objective, an operation method of a first terminal performing sidelink communication may comprise: receiving resource coordination information from a second terminal; in response to that the resource coordination information is information on preferred resource(s), selecting a candidate resource to be used for transmission of the first terminal by preferentially considering the preferred resource(s); and in response to that the resource coordination information is information on non-preferred resource(s), excluding the non-preferred resource(s) from a candidate resource to be used for transmission of the first terminal.

The second terminal may be a terminal to receive data transmitted by the first terminal.

The resource coordination information may be received through a medium access control (MAC) control element (CE) or received through a MAC CE and sidelink control information (SCI).

Whether the resource coordination information is received through a MAC CE or received through a MAC CE and SCI may be configured for each resource pool.

The resource coordination information may include N time resource indication value (TRIV)/frequency resource indication value (FRIV) combination(s), and each of the N TRIV/FRIV combination(s) may indicate M resource(s), each of N and M being a natural number equal to or greater than 1.

A time position and a frequency position of a first resource among M resource(s) indicated by each of the N TRIV/FRIV combination(s) may be further included in the resource coordination information.

The frequency position of the first resource may be indicated by a starting subchannel index.

A time position of a first resource among M resource(s) indicated by a first TRIV/FRIV combination among the N TRIV/FRIV combination(s) may be indicated as a reference slot, and time position(s) of first resource(s) of remaining TRIV/FRIV combination(s) other than the first TRIV/FRIV combination may be indicated by slot offset(s) with respect to the reference slot.

A range of resource(s) indicated by the N TRIV/FRIV combination(s) when the resource coordination information is received through a MAC CE may be different from a range of resource(s) indicated by the N TRIV/FRIV combination(s) when the resource coordination information is received through a MAC CE and SCI.

The resource coordination information may be received from the second terminal based on an explicit request of the first terminal, or received from the second terminal according to satisfaction of a predetermined condition without an explicit request of the first terminal.

According to an exemplary embodiment of the present disclosure for achieving the above-described objective, an operation method of a second terminal performing sidelink communication may comprise: generating resource coordination information that is information on preferred resource(s) or non-preferred resource(s) for transmission of a first terminal; and transmitting the resource coordination information to the first terminal, wherein when the resource coordination information is information on preferred resource(s), a candidate resource to be used for transmission of the first terminal is selected by preferentially considering the preferred resource(s), and when the resource coordination information is information on non-preferred resource(s), the non-preferred resource(s) are excluded from a candidate resource to be used for transmission of the first terminal.

The resource coordination information may be transmitted through a medium access control (MAC) control element (CE) or transmitted through a MAC CE and sidelink control information (SCI).

Whether the resource coordination information is transmitted through a MAC CE or transmitted through a MAC CE and SCI may be configured for each resource pool.

The resource coordination information may include N time resource indication value (TRIV)/frequency resource indication value (FRIV) combination(s), and each of the N TRIV/FRIV combination(s) may indicate M resource(s), each of N and M being a natural number equal to or greater than 1.

A time position and a frequency position of a first resource among M resource(s) indicated by each of the N TRIV/FRIV combination(s) may be further included in the resource coordination information.

A time position of a first resource among M resource(s) indicated by a first TRIV/FRIV combination among the N TRIV/FRIV combination(s) may be indicated as a reference slot, and time position(s) of first resource(s) of remaining TRIV/FRIV combination(s) other than the first TRIV/FRIV combination may be indicated by slot offset(s) with respect to the reference slot.

A range of resource(s) indicated by the N TRIV/FRIV combination(s) when the resource coordination information is received through a MAC CE may be different from a range of resource(s) indicated by the N TRIV/FRIV combination(s) when the resource coordination information is received through a MAC CE and SCI.

According to an exemplary embodiment of the present disclosure for achieving the above-described another objective, a first terminal performing sidelink communication may comprise: at least one transceiver; and a processor controlling the at least one transceiver, wherein the processor causes the first terminal to perform: receiving resource coordination information from a second terminal by using the transceiver; in response to that the resource coordination information is information on preferred resource(s), selecting a candidate resource to be used for transmission of the first terminal by preferentially considering the preferred resource(s); and in response to that the resource coordination information is information on non-preferred resource(s), excluding the non-preferred resource(s) from a candidate resource to be used for transmission of the first terminal.

The resource coordination information may include N time resource indication value (TRIV)/frequency resource indication value (FRIV) combination(s), and each of the N TRIV/FRIV combination(s) may indicate M resource(s), each of N and M being a natural number equal to or greater than 1.

A range of resource(s) indicated by the N TRIV/FRIV combination(s) when the resource coordination information is received through a MAC CE may be different from a range of resource(s) indicated by the N TRIV/FRIV combination(s) when the resource coordination information is received through a MAC CE and SCI.

### [Advantageous Effects]

According to exemplary embodiments of the present disclosure, sidelink resource coordination information can be efficiently transmitted. Thus, the overall performance of the communication system can be improved.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a conceptual diagram illustrating a first exemplary embodiment of a type 1 frame.
FIG. 4 is a conceptual diagram illustrating a first exemplary embodiment of a type 2 frame.
FIG. 5 is a conceptual diagram illustrating a first exemplary embodiment of a transmission method of SS/PBCH block in a communication system.
FIG. 6 is a conceptual diagram illustrating a first exemplary embodiment of an SS/PBCH block in a communication system.
FIG. 7 is a conceptual diagram illustrating a second exemplary embodiment of a method of transmitting SS/PBCH blocks in a communication system.
FIG. 8A is a conceptual diagram illustrating an RMSI CORESET mapping pattern #1 in a communication system, FIG. 8B is a conceptual diagram illustrating an RMSI CORESET mapping pattern #2 in a communication system, and FIG. 8C is a conceptual diagram illustrating an RMSI CORESET mapping pattern #3 in a communication system.
FIG. 9 is a conceptual diagram for describing an example of configuring PSFCH resources used for transmission of HARQ ACK/NACK information.
FIG. 10 is a conceptual diagram illustrating exemplary embodiments of a method for multiplexing a control channel and a data channel in sidelink communication.
FIG. 11 is a conceptual diagram for describing a first exemplary embodiment of a resource coordination information signaling method according to the present disclosure.
FIG. 12 is a conceptual diagram for describing a second exemplary embodiment of a resource coordination information signaling method according to the present disclosure.
FIG. 13 is a conceptual diagram for describing an exemplary embodiment of a method of determining a transmission time of a CI-PSFCH based on a slot in which a PSSCH predicted to have a collision is to be transmitted.
FIG. 14 is a conceptual diagram for describing an exemplary embodiment of a method of determining a transmission time of a CI-PSFCH based on a slot in which SCI used to predict a collision is transmitted.

### [Best mode of the Invention]

Exemplary embodiments of the present disclosure are disclosed herein. However, specific structural and functional details disclosed herein are merely representative for purposes of describing embodiments of the present disclosure. Thus, embodiments of the present disclosure may be embodied in many alternate forms and should not be construed as limited to embodiments of the present disclosure set forth herein.

Accordingly, while the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, `at least one of A and B' may mean `at least one of A or B' or `at least one of combinations of one or more of A and B'. Also, in exemplary embodiments of the present disclosure, 'one or more of A and B' may mean 'one or more of A or B' or 'one or more of combinations of one or more of A and B' .

In exemplary embodiments of the present disclosure, '(re)transmission' may mean `transmission', 'retransmission', or `transmission and retransmission', `(re)configuration' may mean 'configuration', `reconfiguration', or `configuration and reconfiguration', `(re)connection' may mean 'connection', `reconnection', or `connection and reconnection', and '(re-)access' may mean 'access', `re-access', or `access and re-access'.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. Here, the communication system may be used in the same sense as a communication network.

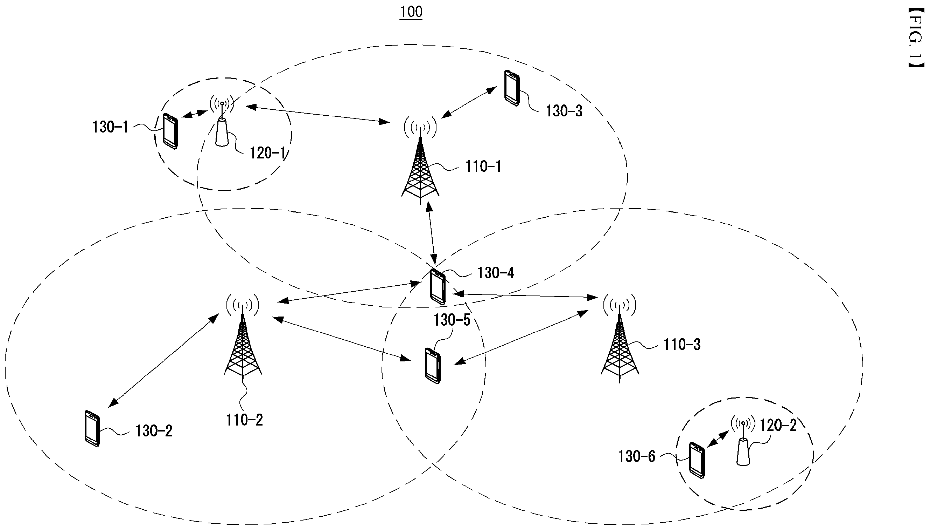

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further comprise a core network (e.g., a serving gateway (S-GW), a packet data network (PDN) gateway (P-GW), and a mobility management entity (MME)). When the communication system 100 is a 5G communication system (e.g., new radio (NR) system), the core network may include an access and mobility management function (AMF), a user plane function (UPF), a session management function (SMF), and the like.

The plurality of communication nodes 110 to 130 may support a communication protocol defined by the 3rd generation partnership project (3GPP) specifications (e.g., LTE communication protocol, LTE-A communication protocol, NR communication protocol, or the like). The plurality of communication nodes 110 to 130 may support code division multiple access (CDMA) technology, wideband CDMA (WCDMA) technology, time division multiple access (TDMA) technology, frequency division multiple access (FDMA) technology, orthogonal frequency division multiplexing (OFDM) technology, filtered OFDM technology, cyclic prefix OFDM (CP-OFDM) technology, discrete Fourier transform-spread-OFDM (DFT-s-OFDM) technology, orthogonal frequency division multiple access (OFDMA) technology, single carrier FDMA (SC-FDMA) technology, non-orthogonal multiple access (NOMA) technology, generalized frequency division multiplexing (GFDM) technology, filter band multi-carrier (FBMC) technology, universal filtered multi-carrier (UFMC) technology, space division multiple access (SDMA) technology, or the like. Each of the plurality of communication nodes may have the following structure.

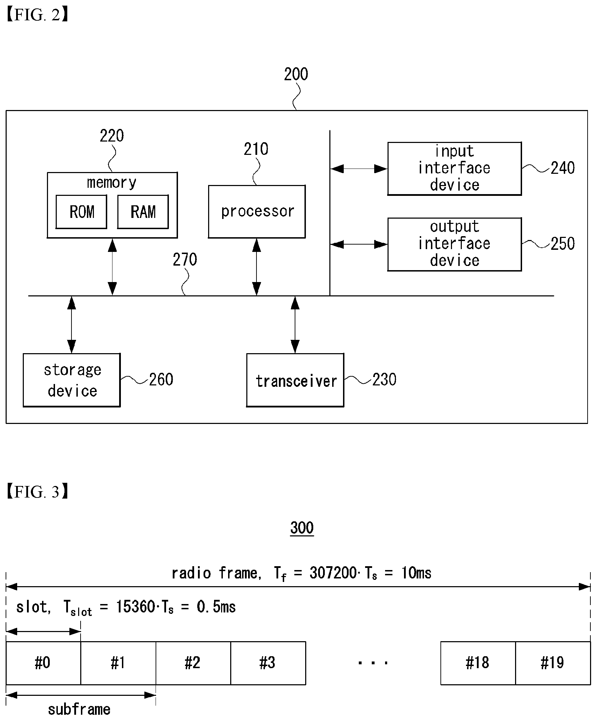

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may not be connected to the common bus 270 but may be connected to the processor 210 via an individual interface or a separate bus. For example, the processor 210 may be connected to at least one of the memory 220, the transceiver 230, the input interface device 240, the output interface device 250 and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B (NB), a evolved Node-B (eNB), a gNB, an advanced base station (ABS), a high reliability-base station (HR-BS), a base transceiver station (BTS), a radio base station, a radio transceiver, an access point, an access node, a radio access station (RAS), a mobile multihop relay-base station (MMR-BS), a relay station (RS), an advanced relay station (ARS), a high reliability-relay station (HR-RS), a home NodeB (HNB), a home eNodeB (HeNB), a road side unit (RSU), a radio remote head (RRH), a transmission point (TP), a transmission and reception point (TRP), or the like.

Each of the plurality of terminals 130-1, 130-2, 130-3, 130-4, 130-5, and 130-6 may refer to a user equipment (UE), a terminal equipment (TE), an advanced mobile station (AMS), a high reliability-mobile station (HR-MS), a terminal, an access terminal, a mobile terminal, a station, a subscriber station, a mobile station, a portable subscriber station, a node, a device, an on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., a single-user MIMO (SU-MIMO), a multi-user MIMO (MU-MIMO), a massive MIMO, or the like), a coordinated multipoint (CoMP) transmission, a carrier aggregation (CA) transmission, a transmission in unlicensed band, device-to-device (D2D) communication (or, proximity services (ProSe)), Internet of Things (IoT) communications, dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Meanwhile, the communication system may support three types of frame structures. A type 1 frame structure may be applied to a frequency division duplex (FDD) communication system, a type 2 frame structure may be applied to a time division duplex (TDD) communication system, and a type 3 frame structure may be applied to an unlicensed band based communication system (e.g., a licensed assisted access (LAA) communication system).

FIG. 3 is a conceptual diagram illustrating a first exemplary embodiment of a type 1 frame.

Referring to FIG. 3, a radio frame 300 may comprise 10 subframes, and a subframe may comprise 2 slots. Thus, the radio frame 300 may comprise 20 slots (e.g., slot #0, slot #1, slot #2, slot #3, ..., slot #18, and slot #19). The length T_{f} of the radio frame 300 may be 10 milliseconds (ms). The length of the subframe may be 1 ms, and the length Tₛₗₒₜ of a slot may be 0.5 ms. Here, Tₛ may indicate a sampling time, and may be 1/30,720,000s.

The slot may be composed of a plurality of OFDM symbols in the time domain, and may be composed of a plurality of resource blocks (RBs) in the frequency domain. The RB may be composed of a plurality of subcarriers in the frequency domain. The number of OFDM symbols constituting the slot may vary depending on configuration of a cyclic prefix (CP). The CP may be classified into a normal CP and an extended CP. If the normal CP is used, the slot may be composed of 7 OFDM symbols, in which case the subframe may be composed of 14 OFDM symbols. If the extended CP is used, the slot may be composed of 6 OFDM symbols, in which case the subframe may be composed of 12 OFDM symbols.

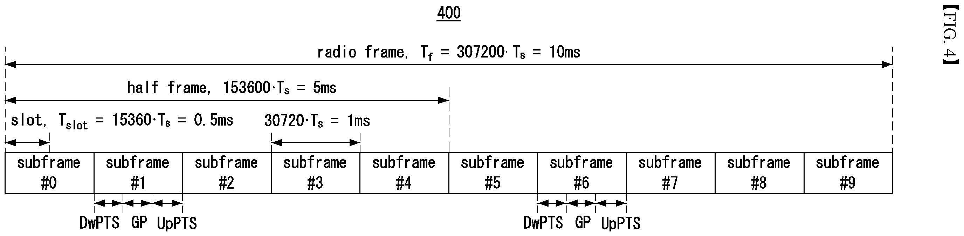

FIG. 4 is a conceptual diagram illustrating a first exemplary embodiment of a type 2 frame.

Referring to FIG. 4, a radio frame 400 may comprise two half frames, and a half frame may comprise 5 subframes. Thus, the radio frame 400 may comprise 10 subframes. The length T_{f} of the radio frame 400 may be 10 ms. The length of the half frame may be 5 ms. The length of the subframe may be 1 ms. Here, Tₛ may be 1/30,720,000s.

The radio frame 400 may include at least one downlink subframe, at least one uplink subframe, and a least one special subframe. Each of the downlink subframe and the uplink subframe may include two slots. The length Tₛₗₒₜ of a slot may be 0.5 ms. Among the subframes included in the radio frame 400, each of the subframe #1 and the subframe #6 may be a special subframe. For example, when a switching periodicity between downlink and uplink is 5 ms, the radio frame 400 may include 2 special subframes. Alternatively, the switching periodicity between downlink and uplink is 10 ms, the radio frame 400 may include one special subframe. The special subframe may include a downlink pilot time slot (DwPTS), a guard period (GP), and an uplink pilot time slot (UpPTS).

The downlink pilot time slot may be regarded as a downlink interval and may be used for cell search, time and frequency synchronization acquisition of the terminal, channel estimation, and the like. The guard period may be used for resolving interference problems of uplink data transmission caused by delay of downlink data reception. Also, the guard period may include a time required for switching from the downlink data reception operation to the uplink data transmission operation. The uplink pilot time slot may be used for uplink channel estimation, time and frequency synchronization acquisition, and the like. Transmission of a physical random access channel (PRACH) or a sounding reference signal (SRS) may be performed in the uplink pilot time slot.

The lengths of the downlink pilot time slot, the guard period, and the uplink pilot time slot included in the special subframe may be variably adjusted as needed. In addition, the number and position of each of the downlink subframe, the uplink subframe, and the special subframe included in the radio frame 400 may be changed as needed.

In the communication system, a transmission time interval (TTI) may be a basic time unit for transmitting coded data through a physical layer. A short TTI may be used to support low latency requirements in the communication system. The length of the short TTI may be less than 1 ms. The conventional TTI having a length of 1 ms may be referred to as a base TTI or a regular TTI. That is, the base TTI may be composed of one subframe. In order to support transmission on a base TTI basis, signals and channels may be configured on a subframe basis. For example, a cell-specific reference signal (CRS), a physical downlink control channel (PDCCH), a physical downlink shared channel (PDSCH), a physical uplink control channel (PUCCH), a physical uplink shared channel (PUSCH), and the like may exist in each subframe.

On the other hand, a synchronization signal (e.g., a primary synchronization signal (PSS) and a secondary synchronization signal (SSS)) may exist for every 5 subframes, and a physical broadcast channel (PBCH) may exist for every 10 subframes. Also, each radio frame may be identified by an SFN, and the SFN may be used for defining transmission of a signal (e.g., a paging signal, a reference signal for channel estimation, a signal for channel state information, etc.) longer than one radio frame. The periodicity of the SFN may be 1024.

In the LTE system, the PBCH may be a physical layer channel used for transmission of system information (e.g., master information block (MIB)). The PBCH may be transmitted every 10 subframes. That is, the transmission periodicity of the PBCH may be 10 ms, and the PBCH may be transmitted once in the radio frame. The same MIB may be transmitted during 4 consecutive radio frames, and after 4 consecutive radio frames, the MIB may be changed according to a situation of the LTE system. The transmission period for which the same MIB is transmitted may be referred to as a 'PBCH TTI', and the PBCH TTI may be 40ms. That is, the MIB may be changed for each PBCH TTI.

The MIB may be composed of 40 bits. Among the 40 bits constituting the MIB, 3 bits may be used to indicate a system band, 3 bits may be used to indicate physical hybrid automatic repeat request (ARQ) indicator channel (PHICH) related information, 8 bits may be used to indicate an SFN, 10 bits may be configured as reserved bits, and 16 bits may be used for a cyclic redundancy check (CRC).

The SFN for identifying the radio frame may be composed of a total of 10 bits (B9 to B0), and the most significant bits (MSBs) 8 bits (B9 to B2) among the 10 bits may be indicated by the PBCH (i.e., MIB). The MSBs 8 bits (B9 to B2) of the SFN indicated by the PBCH (i.e., MIB) may be identical during 4 consecutive radio frames (i.e., PBCH TTI). The least significant bits (LSBs) 2 bits (B1 to B0) of the SFN may be changed during 4 consecutive radio frames (i.e., PBCH TTI), and may not be explicitly indicated by the PBCH (i.e., MIB). The LSBs (2 bits (B1 to B0)) of the SFN may be implicitly indicated by a scrambling sequence of the PBCH (hereinafter referred to as `PBCH scrambling sequence').

A Gold sequence generated by being initialized by a cell ID may be used as the PBCH scrambling sequence, and the PBCH scrambling sequence may be initialized for each four consecutive radio frames (e.g., each PBCH TTI) based on an operation of `mod (SFN, 4)'. The PBCH transmitted in a radio frame corresponding to an SFN with LSBs 2 bits (B1 to B0) set to '00' may be scrambled by the Gold sequence generated by being initialized by the cell ID. Thereafter, the Gold sequences generated according to the operation of `mod (SFN, 4)' may be used to scramble the PBCH transmitted in the radio frames corresponding to SFNs with LSBs 2 bits (B1 to B0) set to '0 1', '10', and `11'.

Accordingly, the terminal having acquired the cell ID in the initial cell search process may identify the value of the LSBs 2 bits (B1 to B0) of the SFN (e.g., '00', '01', '10', or '11') based on the PBCH scramble sequence obtained in the decoding process for the PBCH (i.e., MIB). The terminal may use the LSBs 2 bits (B1 to B0) of the SFN obtained based on the PBCH scrambling sequence and the MSBs 8 bits (B9 to B2) of the SFN indicated by the PBCH (i.e., MIB) so as to identify the SFN (i.e., the entire bits B9 to B0 of the SFN).

The evolved mobile communication network after the LTE should satisfy technical requirements for supporting more diverse service scenarios as well as a high transmission rate, which has been a major concern in the prior arts. Recently, the ITU-R has defined key performance indicators (KPIs) and requirements for IMT-2020, the official name of 5G mobile communication, which are summarized as a high transmission rate (i.e., enhanced Mobile BroadBand (eMBB)), short transmission latency (i.e., Ultra-Reliable Low-Latency Communication (URLLC)), and massive terminal connectivity (i.e., massive Machine Type Communication (mMTC)). According to the ITU-R projected schedule, it aims to allocate frequencies for IMT-2020 in 2019 and complete international standard approvals by 2020.

The 3GPP is developing a new radio access technology (RAT)-based 5G standard that meets the IMT-2020 requirements. According to the definition of the 3GPP, the new RAT is a radio access technology that does not have backward compatibility with the existing 3GPP RAT. The new radio communication system after the LTE, which adopts such the RAT, will be referred to as new radio (NR) in the present disclosure.

One of characteristics of the NR different from the CDMA and LTE, which are the conventional 3GPP systems, is that it utilizes a wide range of frequency bands to increase transmission capacity. In this regard, the WRC-19 agenda hosted by the ITU was to review 24.25 to 86GHz frequency bands as candidate frequency bands for IMT-2020. In the 3GPP, bands from a sub-1GHz band to a 100 GHz band are considered as candidate NR bands.

As a waveform technology for the NR, Orthogonal Frequency Division Multiplexing (OFDM), Filtered OFDM, Generalized Frequency Division Multiplexing (GFDM), Filter Bank Multi-Carrier (FBMC), Universal Filtered Multi-Carrier (UFM|C), and/or the like are discussed as candidate technologies. Although each has pros and cons, Cyclic Prefix (CP)-based OFDM and Single Carrier-Frequency Division Multiple Access (SC-FDMA) are still effective schemes for the 5G system, due to their relatively low implementation complexity at a transceiver and Multiple-Input Multiple-Output (MIMO) scalability. However, in order to flexibly support various 5G usage scenarios, a method of simultaneously accommodating different waveform parameters within one carrier without guard bands may be considered, and for this case, the Filtered OFDM or GFDM having a low out-of-band Emission (OOB) may be suitable.

In the present disclosure, for convenience of description, it is assumed that the CP-based OFDM is used as a waveform technology for radio access. However, this is only for convenience of description, and various exemplary embodiments of the present disclosure are not limited to a specific waveform technology. In general, the category of CP-based OFDM technology includes the Filtered OFDM or Spread Spectrum OFDM (e.g., DFT-spread OFDM) technology.

The subcarrier spacing of the communication system (e.g., OFDM-based communication system) may be determined based on a carrier frequency offset (CFO) and the like. The CFO may be generated by a Doppler effect, a phase drift, or the like, and may increase in proportion to an operation frequency. Therefore, in order to prevent the performance degradation of the communication system due to the CFO, the subcarrier spacing may increase in proportion to the operation frequency. On the other hand, as the subcarrier spacing increases, a CP overhead may increase. Therefore, the subcarrier spacing may be configured based on a channel characteristic, a radio frequency (RF) characteristic, etc. according to a frequency band.

Various numerologies are being considered in the NR system. For example, the subcarrier spacing of the communication system may be configured to 15 kHz, 30 kHz, 60 kHz, or 120 kHz. The subcarrier spacing of the LTE system may be 15 kHz, and the subcarrier spacing of the NR system may be 1, 2, 4, or 8 times the conventional subcarrier spacing of 15 kHz. If the subcarrier spacing increases by exponentiation units of 2 of the conventional subcarrier spacing, the frame structure can be easily designed.

The communication system may support a wide frequency band (e.g., several hundred MHz to tens of GHz). Since the diffraction characteristic and the reflection characteristic of the radio wave are poor in a high frequency band, a propagation loss (e.g., path loss, reflection loss, and the like) in a high frequency band may be larger than a propagation loss in a low frequency band. Therefore, a cell coverage of a communication system supporting a high frequency band may be smaller than a cell coverage of a communication system supporting a low frequency band. In order to solve such the problem, a beamforming scheme based on a plurality of antenna elements may be used to increase the cell coverage in the communication system supporting a high frequency band.

The beamforming scheme may include a digital beamforming scheme, an analog beamforming scheme, a hybrid beamforming scheme, and the like. In the communication system using the digital beamforming scheme, a beamforming gain may be obtained using a plurality of RF paths based on a digital precoder or a codebook. In the communication system using the analog beamforming scheme, a beamforming gain may be obtained using analog RF devices (e.g., phase shifter, power amplifier (PA), variable gain amplifier (VGA), and the like) and an antenna array.

Because of the need for expensive digital to analog converters (DACs) or analog to digital converters (ADCs) for digital beamforming schemes and transceiver units corresponding to the number of antenna elements, the complexity of antenna implementation may be increased to increase the beamforming gain. In case of the communication system using the analog beamforming scheme, since a plurality of antenna elements are connected to one transceiver unit through phase shifters, the complexity of the antenna implementation may not increase greatly even if the beamforming gain is increased. However, the beamforming performance of the communication system using the analog beamforming scheme may be lower than the beamforming performance of the communication system using the digital beamforming scheme. Further, in the communication system using the analog beamforming scheme, since the phase shifter is adjusted in the time domain, frequency resources may not be efficiently used. Therefore, a hybrid beam forming scheme, which is a combination of the digital scheme and the analog scheme, may be used.

When the cell coverage is increased by the use of the beamforming scheme, common control channels and common signals (e.g., reference signal and synchronization signal) for all terminals belonging to the cell coverage as well as control channels and data channels for each terminal may also be transmitted based on the beamforming scheme. In the case of transmitting a common control channel or signal to all terminals while increasing the cell coverage by applying beamforming, it may be difficult to transmit the common control channel or signal to the entire cell coverage by single transmission, and the common control channel or signal should be transmitted several times over multiple beams. A scheme of transmitting a channel or signal several times through different beams over a period of time may be referred to as beam sweeping. When a common control channel or signal is transmitted by applying beamforming, such the beam sweeping operation is absolutely necessary.

A terminal desiring to access the system may acquire downlink frequency/time synchronization and cell ID information using a synchronization signal, acquire uplink synchronization through a random access procedure, and form a radio link. In this case, in the NR system, a synchronization signal/physical broadcast channel (SS/PBCH) block may also be transmitted in a beam sweeping scheme. The SS/PBCH block may be composed of a PSS, an SSS, a PBCH, and the like. In the SS/PBCH block, the PSS, the SSS, and the PBCH may be configured in a time division multiplexing (TDM) manner. The SS/PBCH block may be referred also to as an `SS block (SSB)'. One SS/PBCH block may be transmitted using N consecutive OFDM symbols. Here, N may be an integer equal to or greater than 4. The base station may periodically transmit the SS/PBCH block, and the terminal may acquire frequency/time synchronization, a cell ID, system information, and the like based on the SS/PBCH block received from the base station. The SS/PBCH block may be transmitted as follows.

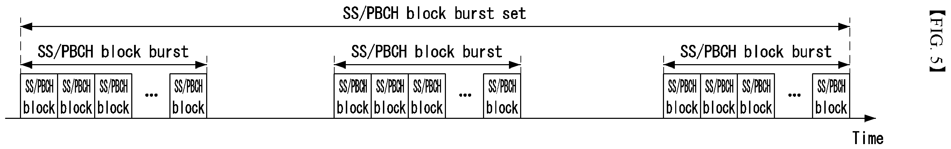

FIG. 5 is a conceptual diagram illustrating a first exemplary embodiment of a transmission method of SS/PBCH block in a communication system.

Referring to FIG. 5, one or more SS/PBCH blocks may be transmitted in a beam sweeping scheme within an SS/PBCH block burst set. Up to L SS/PBCH blocks may be transmitted within one SS/PBCH block burst set. L may be an integer equal to or greater than 2, and may be defined in the 3GPP standard. Depending on a region of a system frequency, L may vary. Within the SS/PBCH block burst set, the SS/PBCH blocks may be located consecutively or distributedly. The consecutive SS/PBCH blocks may be referred to as an `SS/PBCH block burst'. The SS/PBCH block burst set may be repeated periodically, and system information (e.g., MIB) transmitted through the PBCHs of the SS/PBCH blocks within the SS/PBCH block burst set may be the same. An index of the SS/PBCH block, an index of the SS/PBCH block burst, an index of an OFDM symbol, an index of a slot, and the like may be indicated explicitly or implicitly by the PBCH.

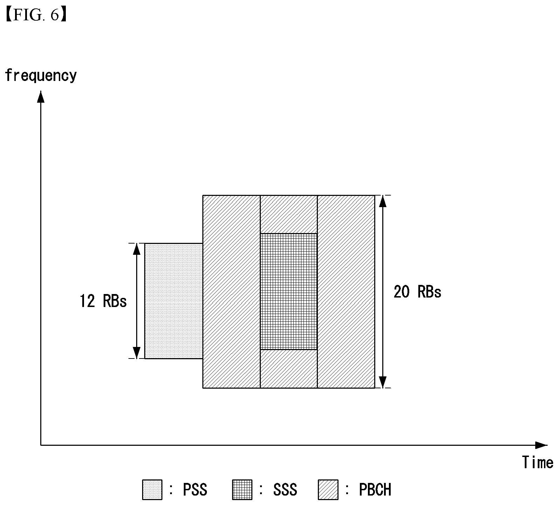

FIG. 6 is a conceptual diagram illustrating a first exemplary embodiment of an SS/PBCH block in a communication system.

Referring to FIG. 6, signals and a channel are arranged within one SS/PBCH block in the order of 'PSS→PBCH→SSS→PBCH'. The PSS, SSS, and PBCH within the SS/PBCH block may be configured in a TDM scheme. In a symbol where the SSS is located, the PBCH may be located in frequency resources above the SSS and frequency resources below the SSS. That is, the PBCH may be transmitted in both end bands adj acent to the frequency band in which the SSS is transmitted. When the maximum number of SS/PBCH blocks is 8 in the sub 6GHz frequency band, an SS/PBCH block index may be identified based on a demodulation reference signal used for demodulating the PBCH (hereinafter, referred to as `PBCH DMRS'). When the maximum number of SSBs is 64 in the over 6GHz frequency band, LSB 3 bits of 6 bits representing the SS/PBCH block index may be identified based on the PBCH DMRS, and the remaining MSB 3 bits may be identified based on a payload of the PBCH.

The maximum system bandwidth that can be supported in the NR system may be 400 MHz. The size of the maximum bandwidth that can be supported by the terminal may vary depending on the capability of the terminal. Therefore, the terminal may perform an initial access procedure (e.g., initial connection procedure) by using some of the system bandwidth of the NR system supporting a wide band. In order to support access procedures of terminals supporting various sizes of bandwidths, SS/PBCH blocks may be multiplexed in the frequency domain within the system bandwidth of the NR system supporting a wide band. In this case, the SS/PBCH blocks may be transmitted as follows.

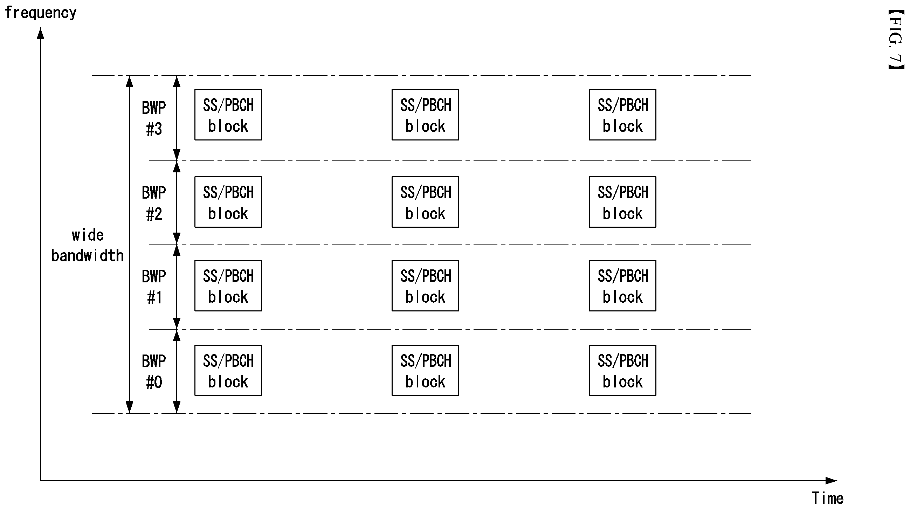

FIG. 7 is a conceptual diagram illustrating a second exemplary embodiment of a method of transmitting SS/PBCH blocks in a communication system.

Referring to FIG. 7, a wideband component carrier (CC) may include a plurality of bandwidth parts (BWPs). For example, the wideband CC may include 4 BWPs. The base station may transmit SS/PBCH blocks in the respective BWPs #0 to #3 belonging to the wideband CC. The terminal may receive the SS/PBCH block(s) from one or more BWPs of the BWPs #0 to #3, and may perform an initial access procedure using the received SS/PBCH block.

After detecting the SS/PBCH block, the terminal may acquire system information (e.g., remaining minimum system information (RMSI)), and may perform a cell access procedure based on the system information. The RMSI may be transmitted on a PDSCH scheduled by a PDCCH. Configuration information of a control resource set (CORESET) in which the PDCCH including scheduling information of the PDSCH through which the RMSI is transmitted may be transmitted on a PBCH within the SS/PBCH block. A plurality of SS/PBCH blocks may be transmitted in the entire system band, and one or more SS/PBCH blocks among the plurality of SS/PBCH blocks may be SS/PBCH block(s) associated with the RMSI. The remaining SS/PBCH blocks may not be associated with the RMSI. The SS/PBCH block associated with the RMSI may be defined as a `cell defining SS/PBCH block'. The terminal may perform a cell search procedure and an initial access procedure by using the cell-defining SS/PBCH block. The SS/PBCH block not associated with the RMSI may be used for a synchronization procedure and/or a measurement procedure in the corresponding BWP. The BWP(s) through which the SS/PBCH block is transmitted may be limited to one or more BWPs within a wide bandwidth.

The RMSI may be obtained by performing an operation to obtain configuration information of a CORESET from the SS/PBCH block (e.g., PBCH), an operation of detecting a PDCCH based on the configuration information of the CORESET, an operation to obtain scheduling information of a PDSCH from the PDCCH, and an operation to receive the RMSI through the PDSCH. A transmission resource of the PDCCH may be configured by the configuration information of the CORESET. A mapping patter of the RMSI CORESET pattern may be defined as follows. The RMSI CORESET may be a CORESET used for transmission and reception of the RMSI.

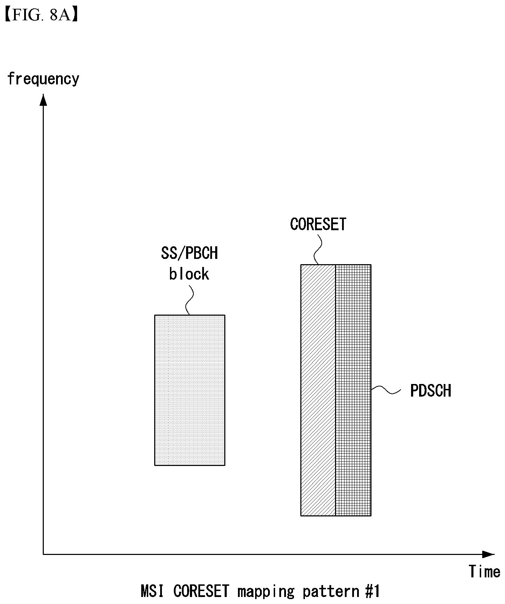

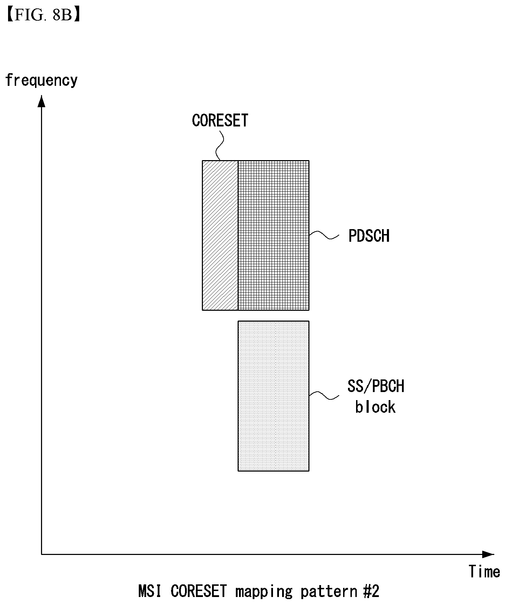

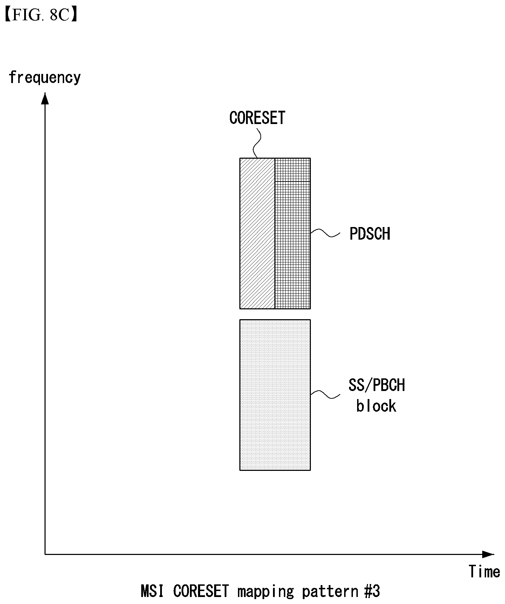

FIG. 8A is a conceptual diagram illustrating an RMSI CORESET mapping pattern #1 in a communication system, FIG. 8B is a conceptual diagram illustrating an RMSI CORESET mapping pattern #2 in a communication system, and FIG. 8C is a conceptual diagram illustrating an RMSI CORESET mapping pattern #3 in a communication system.

Referring to FIGS. 8A to 8C, one RMSI CORESET mapping pattern among the RMSI CORESET mapping patterns #1 to #3 may be used, and a detailed configuration according to the one RMSI CORESET mapping pattern may be determined. In the RMSI CORESET mapping pattern #1, the SS/PBCH block, the CORESET (i.e., RMSI CORESET), and the PDSCH (i.e., RMSI PDSCH) may be configured in a TDM scheme. The RMSI PDSCH may mean the PDSCH through which the RMSI is transmitted. In the RMSI CORESET mapping pattern #2, the CORESET (i.e., RMSI CORESET) and the PDSCH (i.e., RMSI PDSCH) may be configured in a TDM scheme, and the PDSCH (i.e., RMSI PDSCH) and the SS/PBCH block may be configured in a frequency division multiplexing (FDM) scheme. In the RMSI CORESET mapping pattern #3, the CORESET (i.e., RMSI CORESET) and the PDSCH (i.e., RMSI PDSCH) may be configured in a TDM scheme, and the CORESET (i.e., RMSI CORESET) and the PDSCH (i.e., RMSI PDSCH) may be multiplexed with the SS/PBCH block in a FDM scheme.

In the frequency band of 6GHz or below, only the RMSI CORESET mapping pattern #1 may be used. In the frequency band of 6GHz or above, all of the RMSI CORESET mapping patterns #1, #2, and #3 may be used. The numerology of the SS/PBCH block may be different from that of the RMSI CORESET and the RMSI PDSCH. Here, the numerology may be a subcarrier spacing. In the RMSI CORESET mapping pattern #1, a combination of all numerologies may be used. In the RMSI CORESET mapping pattern #2, a combination of numerologies (120kHz, 60kHz) or (240kHz, 120kHz) may be used for the SS/PBCH block and the RMSI CORESET/PDSCH. In the RMSI CORESET mapping pattern #3, a combination of numerologies (120kHz, 120kHz) may be used for the SS/PBCH block and the RMSI CORESET/PDSCH.

One RMSI CORESET mapping pattern may be selected from the RMSI CORESET mapping patterns #1 to #3 according to the combination of the numerology of the SS/PBCH block and the numerology of the RMSI CORESET/PDSCH. The configuration information of the RMSI CORESET may include Table A and Table B. Table A may represent the number of resource blocks (RBs) of the RMSI CORESET, the number of symbols of the RMSI CORESET, and an offset between an RB (e.g., starting RB or ending RB) of the SS/PBCH block and an RB (e.g., starting RB or ending RB) of the RMSI CORESET. Table B may represent the number of search space sets per slot, an offset of the RMSI CORESET, and an OFDM symbol index in each of the RMSI CORESET mapping patterns. Table B may represent information for configuring a monitoring occasion of the RMSI PDCCH. Each of Table A and Table B may be composed of a plurality of sub-tables. For example, Table A may include sub-tables 13-1 to 13-8 defined in the technical specification (TS) 38.213, and Table B may include sub-tables 13-9 to 13-13 defined in the TS 38.213. The size of each of Table A and Table B may be 4 bits.

In the NR system, a PDSCH may be mapped to the time domain according to a PDSCH mapping type A or a PDSCH mapping type B. The PDSCH mapping types A and B may be defined as Table 2 below.

**[Table 1]**

| PDSCH mapping type | Normal CP | | | Extended CP | | |
|---|---|---|---|---|---|---|
| | S | L | S+L | S | L | S+L |
| Type A | {0,1,2,3} (Note 1) | {3,...,14} | {3,...,14} | {0,1,2,3} (Note 1) | {3,...,12} | {3,...,12} |
| Type B | {0,...,12} | {2,4,7} | {2,...,14} | {0,...,10} | {2,4,6} | {2,...,12} |
| Note 1: S=3 is applicable only if dmrs-TypeA-Position = 3 | | | | | | |

The type A (i.e., PDSCH mapping type A) may be slot-based transmission. When the type A is used, a position of a start symbol of a PDSCH may be configured to one of {0, 1, 2, 3}. When the type A and a normal CP are used, the number of symbols constituting the PDSCH (e.g., the duration of the PDSCH) may be configured to one of 3 to 14 within a range not exceeding a slot boundary. The type B (i.e., PDSCH mapping type B) may be non-slot-based transmission. When the type B is used, a position of a start symbol of a PDSCH may be configured to one of 0 to 12. When the type B and the normal CP are used, the number of symbols constituting the PDSCH (e.g., the duration of the PDSCH) may be configured to one of {2, 4, 7} within a range not exceeding a slot boundary. A DMRS (hereinafter, referred to as `PDSCH DMRS') for demodulation of the PDSCH (e.g., data) may be determined by a value of ID indicating the PDSCH mapping type (e.g., type A or type B) and the length. The ID may be defined differently according to the PDSCH mapping type.

As NR phase 1 standardization is completed in releas-15 and NR phase 2 standardization begins in release-16, new features of the NR system are being discussed. One of the representative features is NR-Unlicensed (U). The NR-U is a technology to support operations in an unlicensed spectrum used for purposes such as Wi-Fi to increase network capacity by increasing utilization of limited frequency resources. For such the operations in an unlicensed spectrum, standardization started with the LTE-Licensed-Assisted Access (LAA) technology from Release-13, and has continued to evolve through release-14 LTE-Enhanced LAA (eLAA) and releas-15 LTE-Further Enhanced LAA (FeLAA). In the NR, standardization work is in progress as a work item (WI) in release-16 after a study item (SI) for the NR-U.

In the NR-U system, the terminal may determine whether a signal is transmitted from a base station based on a discovery reference signal (DRS) received from the corresponding base station in the same manner as in the general NR system. In the NR-U system in a Stand-Alone (SA) mode, the terminal may acquire synchronization and/or system information based on the DRS. In the NR-U system, the DRS may be transmitted according to a regulation of the unlicensed band (e.g., transmission band, transmission power, transmission time, etc.). For example, according to Occupied Channel Bandwidth (OCB) regulations, signals may be configured and/or transmitted to occupy 80% of the total channel bandwidth (e.g., 20 MHz).

In the NR-U system, a communication node (e.g., base station, terminal) may perform a Listen Before Talk (LBT) procedure before transmitting a signal and/or a channel for coexistence with another system. The signal may be a synchronization signal, a reference signal (e.g., DRS, DMRS, channel state information (CSI)-RS, phase tracking (PT)-RS, sounding reference signal (SRS)), or the like. The channel may be a downlink channel, an uplink channel, a sidelink channel, or the like. In exemplary embodiments, a signal may mean the `signal', the 'channel', or the `signal and channel'. The LBT procedure may be an operation for checking whether a signal is transmitted by another communication node. If it is determined by the LBT procedure that there is no transmission signal (e.g., when the LBT procedure is successful), the communication node may transmit a signal in the unlicensed band. If it is determined by the LBT procedure that a transmission signal exists (e.g., when the LBT fails), the communication node may not be able to transmit a signal in the unlicensed band. The communication node may perform a LBT procedure according to one of various categories before transmission of a signal. The category of LBT may vary depending on the type of the transmission signal.

Another one of the representative features in release-16 phase 2 is NR-Vehicular-to-Everything (V2X). The V2X is a technology that supports communications in various scenarios such as vehicle-to-vehicle, vehicle and infrastructure, vehicle and pedestrian based on LTE Device to Device (D2D) communication. A lot of discussion for the V2X communication has been made in the LTE system, and it continues to develop even now. In the NR, with the start of release-16, discussion on the NR V2X has been started.

The NR V2X communication (e.g., sidelink communication) may be performed according to three transmission schemes (e.g., unicast scheme, broadcast scheme, groupcast scheme). When the unicast scheme is used, a PC5-RRC connection may be established between a first terminal (e.g. transmitting terminal that transmits data) and a second terminal (e.g., receiving terminal that receives data), and the PC5-RRC connection may refer to a logical connection for a pair between a source ID of the first terminal and a destination ID of the second terminal. The first terminal may transmit data (e.g., sidelink data) to the second terminal. When the broadcast scheme is used, the first terminal may transmit data to all terminals. When the groupcast scheme is used, the first terminal may transmit data to a group (e.g., groupcast group) composed of a plurality of terminals.

When the unicast scheme is used, the second terminal may transmit feedback information (e.g., acknowledgment (ACK) or negative ACK (NACK)) to the first terminal in response to data received from the first terminal. In the exemplary embodiments below, the feedback information may be referred to as a `HARQ-ACK', `feedback signal', a `physical sidelink feedback channel (PSFCH) signal', or the like. When ACK is received from the second terminal, the first terminal may determine that the data has been successfully received at the second terminal. When NACK is received from the second terminal, the first terminal may determine that the second terminal has failed to receive the data. In this case, the first terminal may transmit additional information to the second terminal based on an HARQ scheme. Alternatively, the first terminal may improve a reception probability of the data at the second terminal by retransmitting the same data to the second terminal.

When the broadcast scheme is used, a procedure for transmitting feedback information for data may not be performed. For example, system information may be transmitted in the broadcast scheme, and the terminal may not transmit feedback information for the system information to the base station. Therefore, the base station may not identify whether the system information has been successfully received at the terminal. To solve this problem, the base station may periodically broadcast the system information.

When the groupcast scheme is used, a procedure for transmitting feedback information for data may not be performed. For example, necessary information may be periodically transmitted in the groupcast scheme, without the procedure for transmitting feedback information. However, when the candidates of terminals participating in the groupcast scheme-based communication and/or the number of the terminals participating in that is limited, and the data transmitted in the groupcast scheme is data that should be received within a preconfigured time (e.g., data sensitive to delay), it may be necessary to transmit feedback information also in the groupcast sidelink communication. The groupcast sidelink communication may mean sidelink communication performed in the groupcast scheme. When the feedback information transmission procedure is performed in the groupcast sidelink communication, data can be transmitted and received efficiently and reliably.

In the groupcast sidelink communication, two HARQ-ACK feedback schemes (i.e., transmission procedures of feedback information) may be supported. When the number of receiving terminals in a sidelink group is large and a service scenario 1 is supported, some receiving terminals belonging to a specific range within the sidelink group may transmit NACK through a PSFCH when data reception fails. This scheme may be a groupcast HARQ-ACK feedback option 1. In the service scenario 1, instead of all the receiving terminals in the sidelink group, it may be allowed for some receiving terminals belonging to a specific range to perform reception in a best-effort manner. The service scenario 1 may be an extended sensor scenario in which some receiving terminals belonging to a specific range need to receive the same sensor information from a transmitting terminal. In exemplary embodiments, the transmitting terminal may refer to a terminal transmitting data, and the receiving terminal may refer to a terminal receiving data.

When the number of receiving terminals in the sidelink group is limited and a service scenario 2 is supported, each of all the receiving terminals belonging to the sidelink group may report HARQ-ACK for data individually through a separate PSFCH. This scheme may be a groupcast HARQ-ACK feedback option 2. In the service scenario 2, since PSFCH resources are sufficient, the transmitting terminal may perform monitoring on HARQ-ACK feedbacks of all the receiving terminals belonging to the sidelink group, and data reception may be guaranteed at all the receiving terminals belonging to the sidelink group. Whether or not the ACK/NACK feedback procedure is applied to each of all the transmission schemes may be statically or semi-statically configured through system information and UE-specific RRC signaling, and dynamic configuration thereof may also be possible through control information.

In sidelink communication, ACK/NACK feedback information may be transmitted on a PSFCH. The PSFCH may be a channel used by a sidelink receiving terminal to report ACK/NACK information according to whether a PSSCH is successfully received to a sidelink transmitting terminal. A resource region for PSFCH transmission may be configured within a specific resource pool.

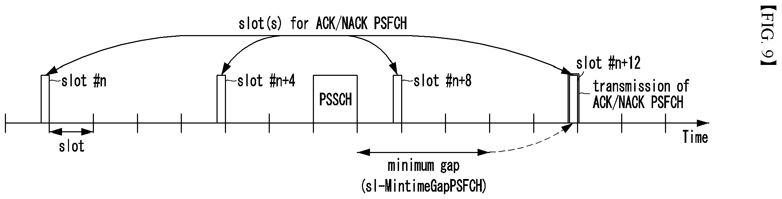

FIG. 9 is a conceptual diagram for describing an example of configuring PSFCH resources used for transmission of HARQ ACK/NACK information.

Referring to FIG. 9, a terminal may transmit a PSFCH in a slot #n+12, which is a slot capable of transmitting a PSFCH after a previously set *sl*-*MinTimeGapPSFCH* (e.g., 3 slots) from a time (e.g., slot) when a PSSCH is received.

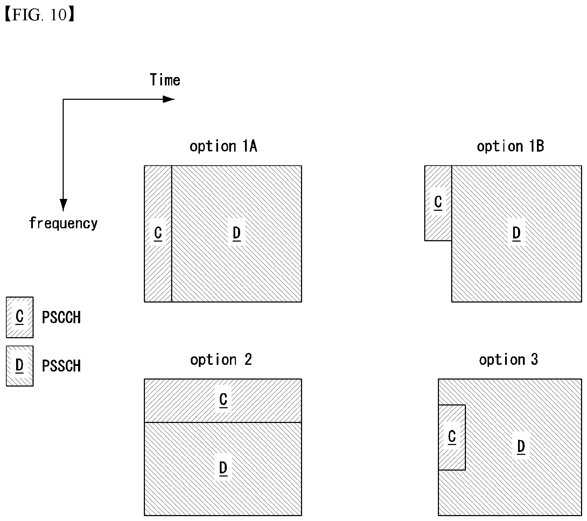

For example, the PSFCHs may be configured with a periodicity of 1, 2, or 4 logical slots. Referring to FIG. 10, in a slot in which PSFCH transmission is possible, the PSFCH may be repeatedly transmitted over two OFDM symbols. The first symbol of the two OFDM symbols in which the PSFCH is transmitted may be used for AGC purpose for adjusting a PSFCH reception power level.

In corresponding symbols, the PSFCH may be transmitted within a frequency resource region configured in advance by system information. In this case, the frequency resource region used for PSFCH transmission may be signaled in form of a bitmap for the corresponding resource pool. The receiving terminal may implicitly select the frequency resource region in which the PSFCH is to be transmitted based on a slot index and a subchannel index of slot(s) and subchannel(s) in which the PSSCH is received. In addition, an index of a PSFCH resource to transmit the PSFCH may be implicitly selected based on a physical layer source ID and a member ID from among PSFCH resources that can be multiplexed in resource block(s) (RB(s)) using cyclic shifts of a PSFCH sequence within the frequency resource region. In this case, the member ID may be used only in the groupcast HARQ ACK/NACK feedback option 2 described above, and in other cases, the member ID may be set to 0. A transmission time of the PSFCH may be determined as the first slot capable of transmitting the PSFCH occurring after a predetermined time (i.e., *sl-MinTimeGapPSFCH*) from a reception time of the corresponding PSSCH. *sl-MinTimeGapPSFCH* may be set in advance to 2 slots or 3 slots, considering a time required for processing the received PSSCH and a time required for preparing ACK/NACK information depending on whether or not the PSSCH is successfully received.

In addition, data reliability at the receiving terminal may be improved by appropriately adjusting a transmit power of the transmitting terminal according to a transmission environment. Interference to other terminals may be mitigated by appropriately adjusting the transmit power of the transmitting terminal. Energy efficiency can be improved by reducing unnecessary transmit power. A power control scheme may be classified into an open-loop power control scheme and a closed-loop power control scheme. In the open-loop power control scheme, the transmitting terminal may determine the transmit power in consideration of configuration, a measured environment, etc. In the closed-loop power control scheme, the transmitting terminal may determine the transmit power based on a transmit power control (TPC) command received from the receiving terminal.

It may be difficult due to various causes including a multipath fading channel, interference, and the like to predict a received signal strength at the receiving terminal. Accordingly, the receiving terminal may adjust a receive power level (e.g., receive power range) by performing an automatic gain control (AGC) operation to prevent a quantization error of the received signal and maintain a proper receive power. In the communication system, the terminal may perform the AGC operation using a reference signal received from the base station. However, in the sidelink communication (e.g., V2X communication), the reference signal may not be transmitted from the base station. That is, in the sidelink communication, communication between terminals may be performed without the base station. Therefore, it may be difficult to perform the AGC operation in the sidelink communication. In the sidelink communication, the transmitting terminal may first transmit a signal (e.g., reference signal) to the receiving terminal before transmitting data, and the receiving terminal may adjust a receive power range (e.g., receive power level) by performing an AGC operation based on the signal received from the transmitting terminal. Thereafter, the transmitting terminal may transmit sidelink data to the receiving terminal. The signal used for the AGC operation may be a signal duplicated from a signal to be transmitted later or a signal preconfigured between the terminals.

A time period required for the ACG operation may be 15 µs. When a subcarrier spacing of 15 kHz is used in the NR system, a time period (e.g., length) of one symbol (e.g., OFDM symbol) may be 66.7 µs. When a subcarrier spacing of 30 kHz is used in the NR system, a time period of one symbol (e.g., OFDM symbol) may be 33.3 µs. In the following exemplary embodiments, a symbol may mean an OFDM symbol. That is, a time period of one symbol may be twice or more than a time period required for the ACG operation.

For sidelink communication, it may be necessary to transmit a data channel for data transmission and a control channel including scheduling information for data resource allocation. In sidelink communication, the data channel may be a physical sidelink shared channel (PSSCH), and the control channel may be a physical sidelink control channel (PSCCH). The data channel and the control channel may be multiplexed in a resource domain (e.g., time and frequency resource domains).

FIG. 10 is a conceptual diagram illustrating exemplary embodiments of a method for multiplexing a control channel and a data channel in sidelink communication.

Referring to FIG. 10, sidelink communication may support an option 1A, an option 1B, an option 2, and an option 3. When the option 1A and/or the option 1B is supported, a control channel and a data channel may be multiplexed in the time domain. When the option 2 is supported, a control channel and a data channel may be multiplexed in the frequency domain. When the option 3 is supported, a control channel and a data channel may be multiplexed in the time and frequency domains. The sidelink communication may basically support the option 3.

In the sidelink communication (e.g., NR-V2X sidelink communication), a basic unit of resource configuration may be a subchannel. The subchannel may be defined with time and frequency resources. For example, the subchannel may be composed of a plurality of symbols (e.g., OFDM symbols) in the time domain, and may be composed of a plurality of resource blocks (RBs) in the frequency domain. The subchannel may be referred to as an RB set. In the subchannel, a data channel and a control channel may be multiplexed based on the option 3.

In the sidelink communication (e.g., NR-V2X sidelink communication), transmission resources may be allocated based on a mode 1 or a mode 2. When the mode 1 is used, a base station may allocate sidelink resource(s) for data transmission within a resource pool to a transmitting terminal, and the transmitting terminal may transmit data to a receiving terminal using the sidelink resource(s) allocated by the base station. Here, the transmitting terminal may be a terminal that transmits data in sidelink communication, and the receiving terminal may be a terminal that receives the data in sidelink communication.

When the mode 2 is used, a transmitting terminal may autonomously select sidelink resource(s) to be used for data transmission by performing a resource sensing operation and/or a resource selection operation within a resource pool. The base station may configure the resource pool for the mode 1 and the resource pool for the mode 2 to the terminal(s). The resource pool for the mode 1 may be configured independently from the resource pool for the mode 2. Alternatively, a common resource pool may be configured for the mode 1 and the mode 2.

When the mode 1 is used, the base station may schedule a resource used for sidelink data transmission to the transmitting terminal, and the transmitting terminal may transmit sidelink data to the receiving terminal by using the resource scheduled by the base station. Therefore, a resource conflict between terminals may be prevented. When the mode 2 is used, the transmitting terminal may select an arbitrary resource by performing a resource sensing operation and/or resource selection operation, and may transmit sidelink data by using the selected arbitrary resource. Since the above-described procedure is performed based on an individual resource sensing operation and/or resource selection operation of each transmitting terminal, a conflict between selected resources may occur.

Accordingly, even when resource allocation mode 2 is used, a terminal (i.e., coordinating terminal) that coordinates resources for data transmission and reception between terminals and transmits and receives information on the coordinated resources (i.e., resource coordination information) to a terminal (i.e., coordinated terminal) that needs to perform data transmission and reception may be configured similarly to a base station of resource allocation mode 1. Since the terminals perform data transmission and reception operations within the coordinated resources, occurrence of a collision between resources may be prevented, and performance can be improved accordingly. In addition, energy efficiency can be improved by the terminals performing sensing and selection operations within limited resources.

Hereinafter, methods for transmitting resource coordination information in sidelink communication and an apparatus for the same will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a transmitting terminal is described, a corresponding receiving terminal may perform an operation corresponding to the operation of the transmitting terminal. Conversely, when an operation of a receiving terminal is described, a corresponding transmitting terminal may perform an operation corresponding to the operation of the receiving terminal.

### Resource coordination information configuration and transmission scheme

Resource coordination information for data transmission and reception between terminals and a transmission scheme of the resource coordination information may be classified into two schemes. One is a scheme (i.e., Scheme 1) of providing information on candidate resources to assist an operation of selecting resources to be actually used for data transmission and reception, and the other is a scheme (i.e., Scheme 2) of providing information on a collision that is predicted to occur or may potentially occur in a resource selected to be actually used for data transmission and reception.

In Scheme 1, a specific terminal (hereinafter referred to as 'UE-A') may transmit information on candidate resources (i.e., resource coordination information) for assisting an resource selection operation to another specific terminal (hereinafter referred to as 'UE-B'). The UE-B may utilize the information on candidate resources for resource selection. In this case, the information on candidate resources may be information on preferred resource(s) or information on non-preferred resource(s). When information on preferred resources is provided, it may be preferable that the UE-B preferentially selects a candidate resource to be used for data transmission from among the preferred resource(s) indicated by the corresponding information. When information on non-preferred resources is provided, it may be preferable that the UE-B preferentially excludes the non-preferred resource(s) indicated by the corresponding information in selecting a candidate resource.

In Scheme 2, when a specific terminal (hereinafter referred to as 'UE-A') predicts that a collision is to occur in a resource selected for data transmission and reception by a specific terminal (hereinafter referred to as 'UE-B') through SCI monitoring, the UE-A may provide information on the predicted collision (i.e., resource coordination information) to the UE-B. In this case, the UE-B receiving the corresponding information may preferably avoid the predicted collision by selecting another resource instead of the resource predicted to have the collision (i.e., resource reselection).

A different criteria for selecting the UE-A and the UE-B for each scheme may be applied. As an example, the UE-A may be a terminal to receive data transmitted from the UE-B. In addition, one or more UE-A(s) or UE-B(s) may be configured. In the mode 2 sidelink communication, whether to support Scheme 1 and whether to support Scheme 2 may be configured in advance through system information or the like, and may be configured for each resource pool. When Scheme 1 is used, a scheme in which resource coordination information is transmitted by an explicit request or a scheme in which resource coordination information is transmitted according to a specific condition rather than an explicit request may be configured. In addition, whether the resource coordination information to be transmitted is information on preferred resource(s) or information on non-preferred resource(s) may be configured. In addition, a combination of the above schemes may be configured. For example, in the case of resource coordination information transmission based on an explicit request, only information on preferred resource(s) may be configured to be transmitted, only information on non-preferred resource(s) may be configured to be transmitted, or one of information on preferred resource(s) or information on non-preferred resource(s) may be configured to be transmitted. In addition, information on whether each scheme is supportable for each terminal may be transmitted through UE-specific RRC signaling or PC5-RRC signaling, and may be configured for each resource pool.

In the case of Scheme 1, the UE-B may receive resource coordination information on preferred resource(s) for data transmission (hereinafter referred to as `preferred resource(s)') or non-preferred resource(s) for data transmission (hereinafter referred to as `non-preferred resource(s)') from the UE-A, and utilize the received resource coordination information in a resource (re)selection process. Therefore, a method for accurately transmitting the resource coordination information is required. The resource coordination information may be transmitted using SCI or a MAC control element (CE), or may be transmitted using both SCI and a MAC CE. The transmission scheme of resource coordination information may be configured for each resource pool through system information, UE-specific RRC signaling, PC5-RRC signaling, or another MAC CE.

When the resource coordination information is transmitted using SCI, the resource coordination information may be transmitted using first-stage SCI or second-stage SCI, or using both first-stage SCI and second-stage SCI. The first-stage SCI may be transmitted on a PSCCH, and the second-stage SCI or MAC CE may be transmitted on a PSSCH.

When the resource coordination information is transmitted using both SCI and a MAC CE, whether the resource coordination information is transmitted through SCI and/or a MAC CE may be dynamically determined according to the type of the resource coordination information (i.e., preferred resource information or non-preferred resource information) or the size of the resource coordination information. Alternatively, the entire resource coordination information may be transmitted redundantly through both the SCI and MAC CE. Alternatively, the entire resource coordination information may be transmitted through the SCI and MAC CE as being divided. More specifically, a part of the resource coordination information may be transmitted through the SCI and the remaining part of the resource coordination information may be transmitted through the MAC CE. In this case, a criterion for the size of resource coordination information for determining which container among SCI and/or MAC CE is used to transmit the resource coordination information may be configured in advance. When it is determined whether the resource coordination information is transmitted through either SCI or MAC CE according to the type of resource coordination information, the type of resource coordination information may be configured to the terminal in advance through system information, UE-specific RRC signaling, or PC5-RRC signaling. The type of resource coordination information may be transmitted as being included in the resource coordination information in form of a 1-bit indicator.

When selecting preferred resource(s) or non-preferred resource(s) in Scheme 1, the UE-A may select candidate resource(s) for the resource coordination information based on received signal received powers (RSRPs) measured through a sensing process.

When the UE-A provides information on preferred resource(s), the UE-A may exclude resource(s) whose RSRP is measured higher than a preset RSRP threshold based on priority(ies) from the preferred resource(s). If the number of resources selected based on the preset RSRP threshold does not satisfy a specific criterion for preferred resources to be provided, the UE-A may increase the RSRP threshold and then perform a process for selecting preferred resources again. Until the number of selected resources satisfies the specific criterion for preferred resources to be provided, the UE-A may continuously increase the RSRP threshold and repeatedly perform the process for selecting preferred resource(s). Alternatively, since the resource coordination information is used as assistance information for the UE-B's resource selection, the number of selected preferred resource(s) may not necessarily satisfy the specific criterion. Accordingly, the UE-A may perform the process for selecting preferred resources while increasing the RSRP threshold only up to a predetermined RSRP upper limit.

Even when the UE-A provides information on non-preferred resource(s), the UE-A may select non-preferred resource(s) based on RSRP measurement results. In this case, unlike the case of selecting preferred resource(s), the UE-A may select resource(s) whose RSRP is measured higher than a preset RSRP threshold as non-preferred resource(s). In this case, until the number of selected non-preferred resource(s) satisfies a specific criterion for non-preferred resource(s) to be provided, the UE-A may repeatedly perform the process of selecting non-preferred resource(s) while decreasing the RSRP threshold. Alternatively, the UE-A may perform the process for selecting non-preferred resources while reducing the RSRP threshold to a predetermined RSPR lower limit.

In the existing sidelink scheduling scheme, at most three resources may be scheduled or reserved through a combination of time-domain slot index information (i.e., time resource indication value (TRIV)) and frequency-domain subchannel index information (i.e., frequency resource indication value (FRIV)) according to configuration. In this case, the number of resources that can be scheduled and reserved through a TRIV/FRIV combination may be configured to the terminal through system information, UE-specific RRC signaling, or PC5-RRC signaling so that signaling for as many resources as possible is possible. Alternatively, the number of resources that can be scheduled and reserved through a TRIV/FRIV combination may be fixed to the maximum value of 3. Meanwhile, information on a resource reservation period may be additionally signaled in addition to the TRIV/FRIV combination. Therefore, in order to provide resource coordination information, a scheme of extending the existing sidelink scheduling scheme by N times may be used. For example, the number of resources that can be provided through the resource coordination information may be at most N*3.

In the existing TRIV/FRIV combination-based scheduling scheme, since a slot index and a starting subchannel index for a first resource are configured using an index of a slot and a subchannel index of a subchannel in which a PSCCH including the corresponding scheduling information is received, they are not separately signaled. However, for resource coordination information, separate signaling of the slot index and the subchannel index of the first resource may be required. That is, for each of N TRIV/FRIV combinations, signaling of a slot index (or slot offset) and a starting subchannel index for a first resource may be required. In this case, time-domain resource information and frequency-domain resource information for the first resource of each of the N combinations may be individually signaled or signaled in combination.

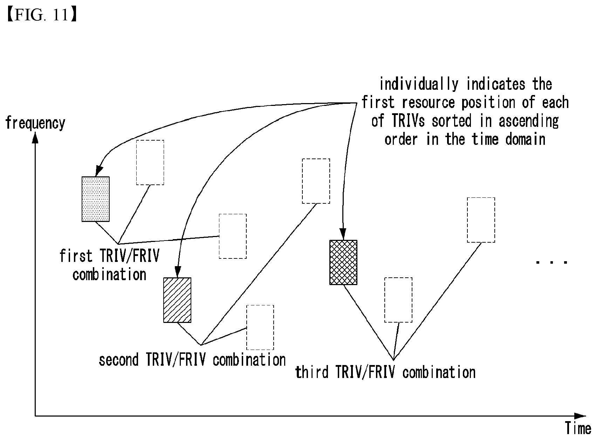

FIG. 11 is a conceptual diagram for describing a first exemplary embodiment of a resource coordination information signaling method according to the present disclosure.

Referring to FIG. 11, information on N TRIV/FRIV combinations may be signaled after being sorted in a chronological order of first resources thereof within a time period for signaling. Resources signaled by the N TRIV/FRIV combinations may be preferably selected so as not to overlap with each other.

When individual signaling is used, time-domain resource information and frequency-domain resource information for each of the N first resources #0, #1, ..., and #N-1 may be signaled. The signaling of time-domain resource information (i.e., an index of a first slot or a slot offset) may be limited to time resources located in a front part of a target time period from which preferred or non-preferred resource(s) are selected. However, since the signaling for frequency-domain resource information (i.e., an index of a starting subchannel or a subchannel offset) requires signaling in the entire frequency-domain resource range without such the limitation, a signaling overhead may be relatively large. Accordingly, the range of signaling of frequency-domain resource information may also be limited. The signaling range for time and frequency-domain resource information may be preconfigured or predefined in a terminal through system information, UE-specific RRC signaling, or PC5-RRC signaling. In this case, the signaling ranges for time-domain resource information and frequency-domain resource information may be configured differently according to container(s) used to transmit the resource coordination information. Specifically, when the resource coordination information is transmitted through both SCI and a MAC CE, since the same information is transmitted through both the SCI and MAC CE, the signaling range may be configured to be smaller considering SCI having a relatively small number of bits. On the other hand, since a relatively large number of bits are available when the resource coordination information is transmitted only through a MAC CE, the signaling range may be configured to be larger. Alternatively, the frequency-domain resource information may not be separately signaled. In this case, since information on the starting subchannel index for the first resource cannot be known, signaling for resources smaller than the maximum number of resources that can be scheduled and reserved using TRIV/FRIV combinations is possible. That is, when scheduling and reservation of up to M resources is possible, M-1 resources may be signaled.

As another method for individual signaling, time-domain resource information and frequency-domain resource information for the resource #0 among the first N resources #0, #1, ..., and #N-1 may be signaled, and time-domain resource information for the resources after the resource #0 may be signaled as offsets with respect to the resource #0. As described above, when the first resources of the N TRIV/FRIV combinations are sorted in the order of early time, the time-domain resource information for the first resources of the remaining N-1 resources may be signaled by applying '+' offsets based on the time-domain resource information of the resource #0. When resource selection at the same time is allowed, an offset of '0' may also be included as the time-domain resource information. The frequency-domain resource information of the first resources of the remaining N-1 resources may be signaled as '+/-' offsets including `0'. As another method for signaling of the frequency-domain resource information, a method using only '+' offsets including '0' and using a modulo operation of the total number of subchannels and the offset may be used. In this case, ranges of the time-domain offset and the frequency-domain offset may be configured in advance through system information, UE-specific RRC signaling, or PC5-RRC signaling. The time-domain resource information and the frequency-domain resource information for the resource #0 may also be signaled as offsets like other first resources #1, #2, ..., and #N-1. In this case, a time-domain reference and a frequency-domain reference for the resource #0 may be separately required.

As another method for individual signaling, offset-based signaling of time-domain resource information and frequency-domain resource information within a wider range may be applied to only the first resource #0 among the N first resources #0, #1, ..., and #N-1, and offset-based signaling of time domain resource information and frequency domain resource information within a limited range may be applied to the remaining first resources #1, #2, ..., and #N-1. Even in this case, a time-domain reference and a frequency-domain reference for the resource #0 may be separately required.

Alternatively, the time-domain resource information and the frequency-domain resource information for the resource #0 among the first N resources #0, #1, ..., and #N-1 may be signaled, and subsequent resources may be signaling using TRIV/FRIV combinations in form of a chain.

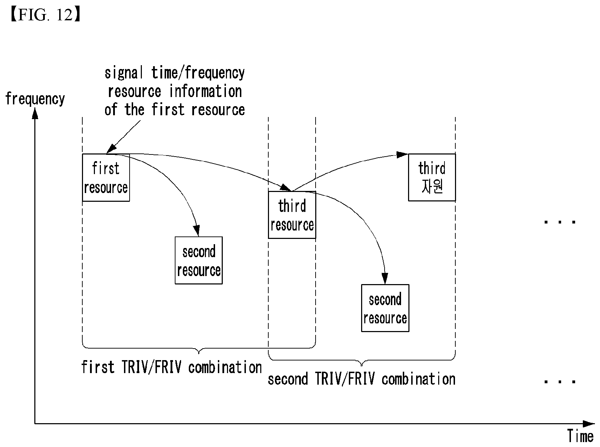

FIG. 12 is a conceptual diagram for describing a second exemplary embodiment of a resource coordination information signaling method according to the present disclosure.

Referring to FIG. 12, time-domain resource information and frequency-domain resource information for the resource #0 corresponding to the first resource of the first combination among the N TRIV/FRIV combinations may be separately signaled, and the last resource of the first TRIV/FRIV combination may be signaled as being regarded as the first resource of the second TRIV/FRIV combination. When such signaling is used, since only signaling of time-domain resource information and frequency-domain resource information for the resource corresponding to the resource #0 among the first N resources #0, #1, ..., and #N-1 is required, the signaling overhead may be reduced.

In the above-described procedure, a reference slot for the time-domain resource information for the N first resources #0, #1, ..., and #N-1 or the time-domain resource information for the first resource #0 among the N first resources may be required. When the time-domain resource information is provided as a slot index or slot offset, the reference slot may be a slot that is a reference for the information. The reference slot may be configured as a slot in which the resource coordination information is transmitted, and information on the reference slot may be transmitted through the resource coordination information separately from the time-domain resource information.

When the reference slot is configured as a slot in which the resource coordination information is transmitted, the reference slot may be time-domain resource information for the resource #0, which is the first of the N first resources #0, #1, ..., and #N-1, and time-domain resource information for the remaining first resources #1 to #N-1 may be expressed as slot offsets with respect to the reference slot.

When information on the reference slot is separately transmitted through the resource coordination information, the corresponding information may be composed of a combination of a frame number such as SFN or DFN and an index of the slot within the corresponding frame. In addition, a reference subchannel index for frequency-domain resource information for the N first resources #0, #1, ..., and #N-1 or for frequency-domain resource information for the first resource #0 among the N first resources may be required. In this case, the reference subchannel index may be a subchannel index #0 within the corresponding resource pool or may be the first subchannel index (i.e., lowest subchannel index) of a frequency resource in which the resource coordination information is transmitted. Alternatively, separately from the frequency-domain resource information, a specific subchannel index within the corresponding resource pool may be indicated as the reference subchannel index through the resource coordination information.

When configuring the resource coordination information based on TRIV/FRIV combinations, if the number of subchannels (e.g., N_{sub}) indicated by a FRIV is greater than the number of subchannels (e.g., N_{sub,req}) required for data transmission, all of N_{sub,req} consecutive subchannels smaller than N_{sub} may be selected as individual candidate resources for data transmission. For example, if N_{sub,req}=3 and the starting subchannel index=1 and N_{sub} = 5 are signaled through a FRIV, subchannels {1, 2, 3 }, subchannels {2, 3, 4}, or subchannels {3, 4, 5} may all be indicated as individual candidate resources for data transmission.

As described above, even when the resource coordination information can be transmitted with N TRIV/FRIV combinations, the number of TRIV/FRIV combinations that can actually be signaled may be smaller than N. However, when the size of the entire resource coordination information varies according to the number of TRIV/FRIV combinations that can actually be signaled, reception complexity of the terminal receiving it may increase. Therefore, regardless of the number of TRIV/FRIV combinations that can be actually signaled, the size of the entire resource coordination information may be maintained to be constant, and information on the number (**≤**N) of actually signaled TRIV/FRIV combinations may be separately added to the corresponding resource coordination information.

### Priority of resource coordination information transmission

The resource coordination information in Scheme 1 may be transmitted from the UE-A to the UE-B according to an explicit request of the UE-B or a specific predefined condition. When the resource coordination information is transmitted according to an explicit request of the UE-B, a request message of the UE-B may be delivered through first-stage SCI, second-stage SCI, or a MAC CE. The same request message may be transmitted through both the second-stage SCI and MAC CE, or transmitted through a combination of the second-stage SCI and MAC CE. In this case, which container(s) the request message is transmitted through may be configured for each resource pool through system information, UE-specific RRC signaling, PC5-RRC signaling, and/or another MAC CE.

When the request message is transmitted through both the second-stage SCI and MAC CE, the same information may be transmitted through both the second-stage SCI and MAC CE, and a 1-bit indicator for identifying whether the corresponding information is the request message or resource coordination information may be included in the corresponding SCI and/or MAC CE. In addition, when the request message is transmitted through a combination of the second-stage SCI and MAC CE, a 1-bit indicator for requesting resource coordination information may be transmitted through the corresponding SCI, and additional request-related information may be transmitted through the MAC CE. Regardless of whether it is transmitted through the second-stage SCI and/or MAC CE, the request message may include a priority value for PSCCH and PSSCH transmission, the number of subchannels, and resource reservation period information for periodic transmission. In this case, the priority value may be referred to in a resource coordination information selection process of the UE-A. In addition, when the UE-A transmits the resource coordination information to the UE-B, it may be applied as a priority for transmission of the resource coordination information. In addition, the request message may include information on a start time and an end time or information on only an end time for configuring a period (i.e., resource selection period) in which preferred/non-preferred resource(s) for the resource coordination information are selected. The UE-A may configure a resource selection period for resource coordination information based on the corresponding information, and the corresponding information may be composed of a specific frame number (i.e., SFN or DFN) and a slot index within the corresponding specific frame. In addition, the request message may further include information indicating whether the requested resource coordination information is information on preferred resource(s) or information on non-preferred resource(s). When the resource coordination information is transmitted according to a specific condition rather than the request message, the above-described information may be preconfigured through system information, UE-specific RRC signaling, and/or PC5-RRC signaling.

As described above, which container(s) the resource coordination information and request message are transmitted through (e.g., whether they will be transmitted through only a MAC CE or through both a MAC CE and second-stage SCI) may be configured for each resource pool through system information, UE-specific RRC signaling, PC5-RRC signaling, or another MAC CE. In this case, it may be preferable in terms of signaling overhead efficiency to apply the corresponding configuration to both the resource coordination information and the request message rather than individually applying the corresponding configuration to the resource coordination information or the request message. That is, when it is configured to be transmitted only through a MAC CE, both the resource coordination information and the request message may be transmitted through only a MAC CE, and when it is configured to be transmitted through both second-stage SCI and a MAC CE, both the resource coordination information and the request message may transmitted through both second-stage SCI and a MAC CE.

As described above, when the resource coordination information is transmitted according to an explicit request message of the UE-B or a specific condition, a priority of the resource coordination information may be set through system information, UE-specific RRC signaling, PC5-RRC signaling, and/or the like. When the corresponding priority is not set, if the resource coordination information is transmitted by a request message, a priority (i.e., priority value) included in the request message or a priority of the request message may be set as the priority of the resource coordination information. When the corresponding priority is not set, if the resource coordination information is transmitted under a specific condition, the terminal may set the priority of the resource coordination information in an implementation manner. When the resource coordination information is transmitted as being multiplexed with other data, a higher priority may be applied by comparing the priority of the resource coordination information with that of the data. In the above-described procedure, the priority is determined according to a priority value corresponding thereto, and a higher priority value means a lower priority (i.e., the highest priority value means the lowest priority). Based on the priority set as described above, the terminal may determine whether to transmit the corresponding resource coordination information through the existing priority comparison procedure between uplink and sidelink or the existing priority comparison procedure between LTE sidelink and NR sidelink. When the resource coordination information is received, the priority of the corresponding resource coordination information may be determined based on priority information included in SCI for scheduling a PSSCH including the corresponding resource coordination information.

When the UE-A transmits resource coordination information to the UE-B, a source ID and a destination ID for transmitting the resource coordination information may be required. When sidelink communication between the UE-A and the UE-B is unicast communication or managed groupcast communication in which a transmitting terminal is aware of information on a receiving terminal, and the transmission of the resource coordination information of the UE-A is transmission according to an explicit request of the UE-B, the UE-A may use a source ID and a destination ID used in the transmission of the request message of the UE-B to transmit the resource coordination information. That is, the source ID and destination ID of the request message of the UE-B may be applied as the destination ID and source ID of the resource coordination information transmission of the UE-A, respectively. In addition, when the request message for the resource coordination information is a request for a terminal other than the UE-B, or the sidelink communication between the UE-A and the UE-B is not unicast or managed groupcast communication, it may be preferable that a source ID and a destination ID for the corresponding terminal are included in the request message. When the resource coordination information is transmitted according to a specific condition, it may be preferable that a source ID and a destination ID are preconfigured.

### Feedback/retransmission of resource coordination information

After the UE-B transmits a request message for resource coordination information, the UE-B may receive the corresponding resource coordination information within a predetermined time (e.g., T_{ci,1}). If the UE-B fails to receive the resource coordination information within the predetermined time, or if the request message is transmitted on a PSSCH (e.g., if the request message is transmitted using a MAC CE), but a NACK for the PSSCH is fed back to the UE-B (i.e., when HARQ ACK/NACK feedback is enabled), the UE-B may retransmit the request message in consideration of a maximum requestable time (e.g., T_{bound,1}) according to a data transmission time (e.g., packet delay budget (PDB)), or the like. In addition, when the UE-B fails to receive the resource coordination information within the predetermined time (e.g., if transmission of a PSSCH including the resource coordination information is identified through SCI, but decoding of the resource coordination information fails), if HARQ ACK/NACK feedback is enabled, the UE-B may transmit a NACK feedback for the PSSCH (i.e., resource coordination information) instead of retransmitting the request message.

On the other hand, the UE-A may need to transmit the requested resource coordination information within a predetermined time (e.g., T_{ci,2}) after receiving the request message for the resource coordination information. When the UE-A re-receives the request message or when the resource coordination information is transmitted on a PSSCH (e.g., when the resource coordination information is transmitted using a MAC CE) but a NACK feedback for the PSSCH (i.e., resource coordination information) is received (i.e., when HARQ ACK/NACK feedback is enabled), the UE-A may retransmit the resource coordination information. Even when the UE-A receives the NACK feedback, if a retransmission time of the resource coordination information is out of a maximum transmittable time (e.g., T_{bound,2}), the UE-A may not retransmit the corresponding resource coordination information. In this case, T_{ci,1}, T_{ci,2}, T_{bound,1}, and T_{bound,2} may be set differently, and some or all of them (e.g., T_{ci,1} and T_{ci,2}, or T_{bound,1} and T_{bound,2}) may be set to the same value. T_{ci,1}, T_{ci,2}, T_{bound,1}, and T_{bound,2} may be configured through system information, UE-specific RRC signaling, or PC5-RRC signaling. Alternatively, the corresponding values may be applied as timer values. For example, a timer for T_{ci,2} may start after the UE-A receives the request message, and the UE-A may transmit the resource coordination information before the timer expires. Even when transmission of resource coordination information is performed based on a specific condition, the predetermined times or timers may be equally applied to transmission/reception and retransmission of the resource coordination information. In all of the above cases, transmission resources for transmitting or retransmitting the resource coordination information should be secured. If the transmission resources are not secured within the maximum transmittable time, the UE-A may cancel the transmission of the resource coordination information.

Scheme 2 is a scheme in which the UE-B receives information on a predicted collision or a potential collision from the UE-A as resource coordination information before transmitting data, and performs a resource reselection operation to avoid a resource in which the collision is predicted. Therefore, in Scheme 2, it is preferable that the procedure for receiving the resource coordination information is not complicated. Therefore, resource coordination information according to Scheme 2 may be preferably transmitted using a PSFCH used for conventional HARQ ACK/NACK transmission. Unlike a PSFCH (hereinafter `AN-PSFCH') including a HARQ ACK/NACK for a PSSCH, which has been described with reference to FIG. 9, a PSFCH (hereinafter `CI-PSFCH') for transmitting resource coordination information (hereinafter, conflict indication) according to Scheme 2 may be used for a resource reselection operation for transmission of a PSSCH. Therefore, a PSFCH for transmitting conflict indication according to Scheme 2 should be transmitted before the UE-B transmits the PSSCH.

Therefore, exemplary embodiments of the present disclosure proposes a time when a CI-PSFCH is transmitted before the UE-B transmits a PSSCH, a resource selection method for transmitting a CI-PSFCH, and a transmission method of a CI-PSFCH.

### CI-PSFCH transmission time determination

As described above, unlike AN-PSFCH, since a CI-PSFCH should be transmitted before the UE-B transmits a PSSCH, it is required to configure an appropriate time for transmission of the CI-PSFCH.

In order to generate a conflict indication, the UE-A may monitor a plurality of SCIs including SCI of the UE-B. When it is identified through the monitoring that a resource (or subchannel(s)) predicted to be used by the UE-B overlaps partially or fully with a resource (or subchannel(s)) predicted to be used by another terminal (e.g., UE-C), the UE-A may predict a collision for the resource predicted to be used by the UE-B, and transmit a conflict indication therefor to the UE-B. In this case, the UE-A may measure an RSRP for the corresponding resource (i.e., resource predicted to be used by the UE-B), and when the measured RSRP is greater than an RSRP threshold according to priority information of the UE-B, priority information in SCI of the another terminal (e.g., UE-C), or a preset RSRP threshold, the UE-A may predict a collision for the corresponding resource. As another method, when the RSRP measured for the corresponding resource (i.e., resource predicted to be used by the UE-B) is within a preset RSRP range, the UE-A may predict a collision for the corresponding resource. As another method, when a distance between the UE-B and the UE-C determined based on SCIs of the UE-B and UE-C is within a predetermined distance, the UE-A may predict a collision for the corresponding resource. As another method, various criteria for determining a resource collision may be predefined, and at least some of them may be configured to terminals through system information or UE-specific RRC signaling, and may be configured for each resource pool.

As described above, a transmission time of the CI-PSFCH for transmitting information on the predicted collision may be configured based on a slot in which the SCI used to predict the collision (i.e., SCI transmitted by the UE-B) is transmitted, or a slot in which a PSSCH in which the corresponding collision is predicted to occur is to be transmitted. When a transmission time of the CI-PSFCH is determined based on the slot in which the SCI used to predict the collision is transmitted, earlier signaling may be possible. In general, since a plurality of PSSCH resources can be reserved by one SCI (hereinafter referred to as 'first SCI' for convenience), a collision predicted for PSSCH resources to be used later may be signaled more quickly. However, the collision may be determined through monitoring on not only the first SCI but also other SCIs (hereinafter referred to as `second SCI'). Therefore, when the resource coordination information (i.e., information on the predicted collisions) is signaled at a time determined based on the first SCI, prediction information on collision(s) caused by the second SCI(s) transmitted after the corresponding time cannot be provided, and thus it may be difficult to expect a large performance improvement effect. In addition, when a plurality of reserved resources are signaled by the first SCI, it may be required to additionally signal information on in which resource among the plurality of resources the collision is to occur, which may increase signaling overhead. On the other hand, when the time of transmitting the resource coordination information is determined based on the slot in which the PSSCH in which the collision is predicted to occur is to be transmitted, a signaling delay time may increase. However, since the collision can be predicted based on monitoring results for a larger number of second SCIs, better performance can be expected. In addition, even when a plurality of resources are signaled by the first SCI, since the resource coordination information is signaled at the time determined based on the location of the resource in which the actual collision is predicted, information on in which resource the collision is predicted to occur may not need to be signaled separately.

As described above, advantages and disadvantages may depend on whether the transmission time of the CI-PSFCH is determined based on the slot in which the SCI used to predict the collision is transmitted or based on the slot in which the PSSCH in which the collision is predicted to occur is to be transmitted. Therefore, which of the two scheme is selected may be configured for each resource pool according to various system conditions through system information, UE-specific RRC signaling, a MAC CE, or the like.

Hereinafter, an exemplary embodiment of the present disclosure proposes a method for determining a transmission time of a CI-PSFCH based on a slot in which a PSSCH predicted to have a collision is to be transmitted. Unlike an AN-PSFCH transmitted after receiving a PSSCH, the CI-PSFCH should be transmitted from the UE-A to the UE-B before the UE-B transmits the PSSCH. In this case, it may be preferable that the time of transmitting the CI-PSFCH is determined considering a processing time required for the UE-B to receive and process the CI-PSFCH and a processing time required for the UE-B to perform resource reselection according to information of the received CI-PSFCH. Therefore, proposed is a method in which a minimum time gap (e.g., Tₘᵢₙ) considering the above-mentioned processing times is configured, and the time of transmitting the CI-PSFCH is determined as the nearest (i.e., latest) slot among slots in which the CI-PSFCH can be transmitted (i.e., CI-PSFCH transmission slots) at a time ahead of Tₘᵢₙ or more from the slot in which the PSSCH predicted to have the collision is to be transmitted. In this case, a value of Tₘᵢₙ may be set through system information, UE-specific RRC signaling, and/or MAC CE.

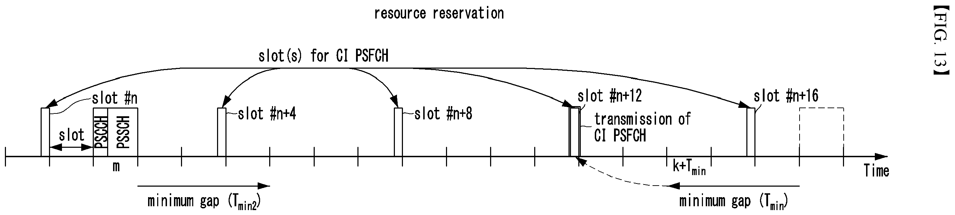

FIG. 13 is a conceptual diagram for describing an exemplary embodiment of a method of determining a transmission time of a CI-PSFCH based on a slot in which a PSSCH predicted to have a collision is to be transmitted.

Referring to FIG. 13, it may be assumed that a slot in which a resource reserved for transmission of a PSSCH is located is a slot #k, Tₘᵢₙ is set to 3 slots, and a period for a CI-PSFCH transmission slot is set to 4 slots. The UE-A may transmit a CI-PSFCH to the UE-B in a slot #(n+12), which is the nearest (i.e., latest) slot among CI-PSFCH transmission slots at a slot #(k-Tₘᵢₙ) or at a time earlier than the slot #(k-Tₘᵢₙ). The UE-B may perform CI-PSFCH monitoring in the slot #(n+12) determined based on the slot #k reserved for transmission of the PSSCH. The UE-B may obtain resource coordination information in the slot #(n+12), which indicates that transmission of the PSSCH to be performed in the slot #k is predicted to collide with transmission of a PSSCH of another terminal (e.g., UE-C), perform resource reselection based on the resource coordination information, and transmit the PSSCH using another selected resource. In FIG. 13, an example in which Tₘᵢₙ=3 is set has been described. However, it may be preferrable that the value of Tₘᵢₙ is set to T₃ (=T_{proc,1}^{SL}) or more, which is a time for which preforming of re-evaluation on a resource selected through the release-16 sidelink resource selection process before performing actual sidelink data transmission using the selected resource is allowed. In addition, it may be preferable to transmit the CI-PSFCH after T_{min,2}, which is a processing time required for the UE-A to determine a predicted collision after receiving SCI. In this case, the value of T_{min,2} may be configured equally to *sl-MinTimeGapPSFCH* (described with reference to FIG. 9), which is the minimum time gap for transmitting HARQ ACK/NACK information for a received PSSCH after receiving the PSSCH and defined in the existing release-16 sidelink specification. As another method, unlike AN-PSFCH, it may not be necessary to determine whether data reception is successful for the CI-PSFCH, and thus T_{min,2} may be set to T_{proc,0}^{SL} shorter than *sl-MinTimeGapPSFCH.* The resource coordination information in Scheme 2 is information on a collision predicted in a slot in which the PSSCH is to be transmitted, and does not convey even information on a subchannel for transmission of the PSSCH in the frequency domain within the corresponding slot. Therefore, when performing resource reselection, it is preferable that the UE-B selects a resource of a slot other than the corresponding slot. More specifically, in the resource reselection process, the UE-B may preferably exclude all subchannels corresponding to the slot in which the collision is predicted by the resource coordination information from candidate resources for resource reselection. When the resource coordination information is transmitted at a time determined based on the slot in which the PSSCH is to be transmitted, even when a plurality of resources are reserved by SCI, in which reserved resource the collision is predicted to occur may be identified. Accordingly, upon receiving the resource coordination information, the UE-B may exclude subchannel(s) belonging to the slot in which the PSSCH is reserved from candidate resources for resource reselection. Even in this case, the UE-B may exclude, from the candidate resources for resource reselection, subchannel(s) corresponding to slot(s) including all its reserved resources as well as the slot in which the PSSCH predicted to have the collision is to be transmitted. Alternatively, the UE-B may determine that the collision indicated by the received resource coordination information is limited to subchannel(s) reserved for transmission of the PSSCH within the corresponding slot(s) (immediately next reserved resource slot or slot(s) including all reserved resources), and may exclude only resources overlapping the corresponding subchannel(s) from candidate resources. The above-described procedure may be configured for each resource pool through system information, UE-specific RRC signaling, PC5 RRC signaling, or MAC CE.

Hereinafter, a method of transmitting a CI-PSFCH when a time of transmitting the CI-PSFCH is determined based on a slot in which SCI used to predict a collision is transmitted will be described. When a CI-PSFCH is transmitted at a time determined based on a slot in which SCI used to predict a collision is transmitted, it may be preferable that the UE-B transmits the CI-PSFCH after a predetermined processing time elapses from a time when the SCI is received. Therefore, a minimum time gap (i.e., T_{min,2}) considering the processing time may be configured, and the UE-B may transmit the CI-PSFCH in the nearest (earliest) slot among slots in which the CI-PSFCH can be transmitted at a time after T_{min,2} elapses. In this case, a value of T_{min,2} may be set through system information, UE-specific RRC signaling, or MAC CE.

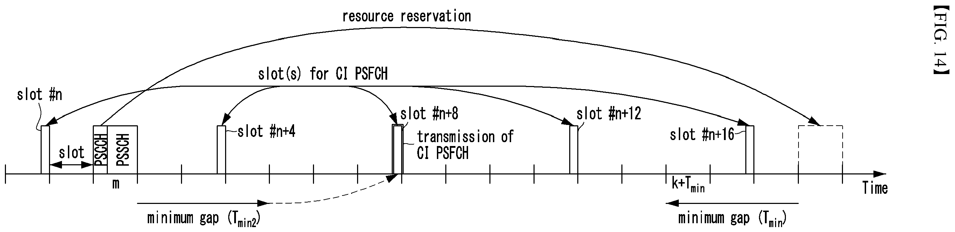

FIG. 14 is a conceptual diagram for describing an exemplary embodiment of a method of determining a transmission time of a CI-PSFCH based on a slot in which SCI used to predict a collision is transmitted.

Referring to FIG. 14, it may be assumed that T_{min,2} is set to 3 slots and a period of a CI-PSFCH transmission slot is set to 4 slots. When a PSCCH including SCI is transmitted in a slot #m and a collision is predicted in a resource of a slot #k reserved through the corresponding SCI, the UE-A may transmit a CI-PSFCH to the UE-B in the nearest (earliest) slot #(n+8) among CI-PSFCH transmission slots in a time period of slots from the slot #m to a slot #(m+T_{min,2}) or a time thereafter. The UE-B may perform monitoring for the CI-PSFCH in the slot #(n+8). The UE-B may obtain resource coordination information in the slot #(n+8) indicating that transmission of a PSSCH to be performed in the slot #k is predicted to collide with transmission of a PSSCH of another UE (e.g., UE-C), perform resource reselection based on the resource coordination information, and transmit the PSSCH using another selected resource. In FIG. 14, an example in which T_{min,2} is set to 3 has been described. However, the value of T_{min,2} may be configured equally to *sl-MinTimeGapPSFCH,* which is the minimum time period for transmitting HARQ ACK/NACK information for a received PSSCH described with reference to FIG. 9. Unlike AN-PSFCH, it may not be necessary to determine whether data reception is successful or not for the CI-PSFCH, and thus T_{min,2} may be set to T_{proc,0}^{SL} shorter than *sl-MinTimeGapPSFCH.* In addition, in order for the UE-B to receive the CI-PSFCH and perform resource reselection based on the received CI-PSFCH, it may be preferable that the CI-PSFCH is received before at least Tₘᵢₙ from the slot k in which actual collision is predicted. In this case, it may be preferable that Tₘᵢₙ is set to T₃ (=T_{proc,}^{1SL}) or more, which is a time for which performing of re-evaluation on a resource selected through the release-16 sidelink resource selection process before actually performing side data transmission using the selected resource is allowed. The resource coordination information in Scheme 2 is information on a collision predicted in a slot in which the PSSCH is to be transmitted, and does not convey even information on a subchannel for transmission of the PSSCH in the frequency domain within the corresponding slot. Therefore, when performing resource reselection, it is preferable that the UE-B selects a resource of a slot other than the corresponding slot. More specifically, in the resource reselection process, the UE-B may preferably exclude all subchannels corresponding to the slot in which the collision is predicted by the resource coordination information from candidate resources for resource reselection. When a plurality of resources are reserved by SCI, the resource coordination information may include additional information on in which reserved resource the collision is predicted to occur. In this case, the UE-B may exclude subchannel(s) belonging to a reserved resource slot immediately following the slot in which the corresponding resource coordination information is received from candidate resources for resource reselection. Alternatively, the UE-B may exclude, from candidate resources for resource reselection, subchannel(s) belonging to slot(s) including all its reserved resources. Alternatively, the UE-B may determine that the collision indicated by the received resource coordination information is limited to subchannel(s) reserved for transmission of the PSSCH within the corresponding slot(s) (immediately next reserved resource slot or slot(s) including all reserved resources), and may exclude only resources overlapping the corresponding subchannel(s) from candidate resources. The above-described procedure may be configured for each resource pool through system information, UE-specific RRC signaling, PC5 RRC signaling, or MAC CE.

When a CI-PSFCH is transmitted as described above, if a transmission period of an AN-PSFCH for HARQ ACK/NACK information transmission for a PSSCH received in a slot #m is configured to be equal to a transmission period of a CI-PSFCH, the CI-PSFCH and the AN-PSFCH may be transmitted always in the same slot. Therefore, in order to avoid this, the transmission period of the CI-PSFCH and the transmission period of the AN-PSFCH may be configured to different from each other. Alternatively, the transmission period of the CI-PSFCH and the transmission period of the AN-PSFCH may be configured to be the same, and an offset may be applied between a CI-PSFCH transmission slot and an AN-PSFCH transmission slot. When the CI-PSFCH and the AN-PSFCH are always transmitted in the same slot, the CI-PSFCH or the AN-PSFCH may be transmitted according to a method for prioritizing between the CI-PSFCH and the AN-PSFCH described later.

In FIG. 13 or 14, in order for the UE-B to select a new resource based on the resource coordination information, it may be preferable that the CI-PSFCH is received before a minimum time gap Tₘᵢₙ (≥ T₃) from the resource in which the collision is predicted. If the minimum time gap is not guaranteed, the UE-A may drop transmission of the CI-PSFCH.

### Determination of CI-PSFCH transmission resource

Like an AN-PSFCH, configuration of a transmission resource of a CI-PSFCH is required. Therefore, methods for configuring a transmission resource of a CI-PSFCH will be described below.

For example, in case of transmission of an AN-PSFCH, a frequency region, resource period, and number of cyclic shift pairs that can be multiplexed within one RB for transmission and reception of the AN-PSFCH, the number of AN-PSFCH resources capable of multiplexing HARQ ACK/NACK information, and a scrambling ID for sequence hopping of the AN-PSFCH may be configured. In order to reduce signaling overhead, it may be preferable that a transmission period of the CI-PSFCH is configured identically to a transmission period of the AN-PSFCH, rather than being configured separately. In addition, it may be preferable that the number of cyclic shift pairs capable of being multiplexed within one RB is not separately set and the same value as the value set for AN-PSFCH is used or always fixed to one. Similarly to the HARQ ACK/NACK information, it may be preferable that the number of CI-PSFCH resources capable of multiplexing collision indication information is also the same as the number of AN-PSFCH resources or always fixed to one. It may be preferable that the scrambling ID for sequence hopping of CI-PSFCH also uses the same value as that of the AN-PSFCH or is always fixed to 0. Alternatively, when the AN-PSFCH and the CI-PSFCH are transmitted in the same resource region, the scrambling ID for sequence hopping of CI-PSFCH may be set separately in order to reduce interference with the AN-PSFCH sequence.

The AN-PSFCH is transmitted in the last two symbols of an AN-PSFCH transmission slot, and its frequency region may be configured through RB-level bitmap signaling in a corresponding resource pool. Therefore, a CI-PSFCH having the same transmission period as the AN-PSFCH may be transmitted in the same slot and the same symbols as the AN-PSFCH, and a frequency region of the CI-PSFCH may be configured differently from that of the AN-PSFCH, thereby reducing signaling overhead. In this case, a frequency-domain resource of the CI-PSFCH may be implicitly configured to be a resource other than the frequency region configured for transmission of the AN-PSFCH within the corresponding slot. Alternatively, the frequency-domain resource of the CI-PSFCH may be configured through separate RB-level bitmap signaling in the same manner as in the case of AN-PSFCH.

As described above, in the resource region of the CI-PSFCH configured through such the parameter signaling, a transmission time of the CI-PSFCH may be determined based on a slot in which a PSSCH predicted to have a collision is to be transmitted. A resource of the CI-PSFCH at that time may be selected based on an index of the slot and an index of a subchannel in which the PSSCH predicted to have the collision is to be transmitted. It may be preferable that a PSFCH index actually used within the selected CI-PSFCH resource is set based on a physical layer source ID (i.e., P_ID) indicated by SCI of the UE-B. When an ID (e.g., member ID (M_ID)) for a receiving terminal is additionally configured from a higher layer, the ID for the receiving terminal may also be applied. When the ID for the receiving terminal is not additionally configured, the corresponding value may be fixed to 0. In addition, when there are one or more subchannels for transmission of the PSSCH predicted to have the collision, it may be preferable that an index of the first subchannel among the one or more subchannels (i.e., the smallest subchannel index) becomes a subchannel index used to select the CI-PSFCH resource.

The information transmitted and received on the CI-PSFCH may include information (i.e., collision prediction information) indicating that a collision is predicted in a resource where the PSSCH of the UE-B is to be transmitted. Alternatively, the information transmitted and received on the CI-PSFCH may be composed of information that a collision is predicted in a resource wherein the PSSCH of the UE-B is to be transmitted or information that a collision is not predicted in the corresponding resource (i.e., when the information transmitted and received on the CI-PSFCH is information on whether a collision is predicted or not). When only the collision prediction information is transmitted/received, only one value in a cyclic shift pair may be used for transmission/reception of the CI-PSFCH. When either information indicating that collision is predicted or information that collision is not predicted is transmitted/received depending on a circumstance, two values of a cyclic shift pair may be used as being assigned to the respective information. In this case, whether to transmit/receive the collision prediction information or the information on whether a collision is predicted or not may be configured through system information or UE-specific RRC signaling.

As another method, information of a priority of data (e.g., PSSCH) to be transmitted by the UE-B and a priority of data (e.g., PSSCH) of another terminal (e.g., UE-C) predicted to collide with the data to be transmitted by the UE-B may be transmitted and received through the CI-PSFCH. For example, a result of comparing the priority of data to be transmitted by the UE-B and the priority of data of another terminal (e.g., UE-C) predicted to collide with the data to be transmitted by the UE-B may be be transmitted and received through the CI-PSFCH. That is, it may be notified through the CI-PSFCH that the priority of data of the UE-C is lower than the priority of data of the UE-B in which collision in the corresponding resource is predicted, or that the priority of data of the UE-C is higher than the priority of data of the UE-B in which collision in the corresponding resource is predicted. In this case, two values of a cyclic shift pair may be respectively assigned to two types of information. When the priorities of the data of the two terminals are the same, it may be configured in advance to be indicated by one of the two values of the cyclic shift pair. If the priority of data of the UE-C is lower than the priority of data of the UE-B, the UE-B may not need to perform resource reselection. That is, the UE-B may perform resource reselection only when the priority of data of the UE-C is higher than that of data of the UE-B.

Alternatively, information on various collision prediction situations may be informed through the CI-PSFCH. For example, two values of a cyclic shift pair may be respectively assigned to a case in which collision occurrence is predicted by reserved resources of another terminal and a case in which collision prediction itself is not performed. More specifically, the case in which collision prediction itself is not performed may occur due to a half-duplex issue in which the UE-A cannot perform sensing of a control channel of another terminal while performing another sidelink transmission.

In the above methods, two values of a cyclic shift pair may correspond to the zeroth and sixth cyclic shifts of a PSFCH sequence, respectively.

As another method, when a transmission time of a CI-PSFCH is determined based on a slot in which SCI of the UE-B used to predict a collision is transmitted (i.e., case of FIG. 14), if the SCI reserves a plurality of resources, whether or not a collision is predicted for each of the plurality of reserved resources may be notified through the CI-PSFCH. For example, when the SCI reserves two additional resources (hereinafter, a first reserved resource and a second reserved resource) in addition to a resource for transmission of a PSSCH in a corresponding slot, a collision may be predicted in the first reserved resource or the second reserved resource, or a collision may be predicted in both the first reserved resource and the second reserved resource. In this case, the UE-A may inform information on in which reserved resource the collision is predicted by applying different cyclic shifts. More specifically, the UE-A may transmit the CI-PSFCH by using a cyclic shift #0 when a collision is predicted in the first reserved resource, a cyclic shift #1 when a collision is predicted in the second reserved resource, and a cyclic shift #2 when a collision is predicted in both the first and second reserved resources. In the above method, the cyclic shifts #0, #1, and #2 may correspond to the zeroth, fourth, and eighth cyclic shifts of a PSFCH sequence, respectively. Even when a resource collision is not predicted, the CI-PSFCH may be transmitted by additionally applying another cyclic shift value. When whether a collision is predicted for each reserved resource is not informed using a different cyclic shift, for which reserved resource among the plurality of reserved resources the resource coordination information is transmitted through CI-PSFCH may be preconfigured through system information or PC5-RRC signaling, or the like, or may be predefined by technical specifications. For example, when only one additional reserved resource can be reserved using the SCI, the information transmitted through the CI-PSFCH may be information on the reserved resource, and when two or more additional reserved resources can be reserved using the SCI, the information transmitted through the CI-PSFCH may be information on the earliest reserved resource (e.g., the first reserved resource when the first reserved resource and the second reserved resource exist as described above).

### Transmission/reception priority of CI-PSFCH

When transmitting resource coordination information, the UE-A may dynamically select and transmit the aforementioned information on whether a collision is predicted or not, collision prediction information, and information on a priority of data for which a collision is predicted according to a circumstance.

For example, different M_ID values may be assigned to the above-described collision prediction information (or information on whether a collision is predicted or not) and information on a priority of data for which a collision is predicted, and the UE-A may dynamically select the type of information to be transmitted according to a M_ID value. In this case, M_ID values corresponding to different types of information may be configured in advance through system information or UE-specific RRC signaling. Different M_ID values may be used to classify other types of information in addition to the above-described information on whether a collision is predicted or not (or collision prediction information) and information on a priority of data for which a collision is predicted. In addition, since the resource coordination information is information on a resource collision between a plurality of terminals (e.g., resource collision between the UE-B and the UE-C), when the resource coordination information is transmitted to some of the plurality of terminals or only to one terminal, which of the corresponding terminals to which the resource coordination information is to be transmitted may be preconfigured (e.g., specified as UE-B), or may be determined in consideration of priorities of data of the plurality of terminals. When transmission of a plurality of CI-PSFCHs is allowed, the resource coordination information may be transmitted to all of the corresponding plurality of terminals (e.g., UE-B and UE-C).

When the UE-A needs to simultaneously transmit a plurality of CI-PSFCHs, a CI-PSFCH transmission method therefor is required. When the UE-A needs to simultaneously transmit a plurality of CI-PSFCHs, the UE-A may transmit all of the plurality of CI-PSFCHs or transmit only some of the plurality of CI-PSFCHs. When the UE-A transmits only some CI-PSFCHs, the number of transmittable CI-PSFCHs may be configured through system information, UE-specific RRC signaling, or PC5 RRC signaling. If the number of transmittable CI-PSFCHs is preconfigured, the UE-A may transmit as many CI-PSFCHs as the configured number. That is, the UE-A may select as many terminal(s) as the configured number based on priorities of data of a plurality of terminal(s) for which a collision is predicted, and transmit CI-PSFCHs to the selected terminal(s).

A priority of a CI-PSFCH may be determined according to a priority of corresponding data, and the priority of the data may be determined based on SCI including scheduling information of the data. In this case, the highest priority among priorities of SCIs including scheduling information of a pair of PSSCHs for which a collision is predicted may be selected as the priority of the CI-PSFCH. Alternatively, the priority of the SCI for which collision prediction information is to be actually transmitted may be selected as the priority of the CI-PSFCH. Alternatively, the priority of the CI-PSFCH may be previously set to a specific priority, and in this case, the specific priority may be the highest priority. In addition, when a transmission power required for transmission of a preset number of CI-PSFCHs exceeds the maximum transmission power of the terminal, the number of actually transmitted CI-PSFCHs may be further limited within a range that does not exceed the maximum transmission power of the terminal.

Even when the UE-B receives CI-PSFCH(s), a reception priority needs to be applied. Since a CI-PSFCH received the by UE-B is information on data scheduled by the UE-B, a priority of the data scheduled by the UE-B (i.e., priority included in the SCI that scheduled the data) may be applied to determine a reception priority of the CI-PSFCH. In the above-described procedure, the priority may be determined according to a priority value, and a high priority value means a low priority (i.e., the highest priority value means the lowest priority).

When the UE-A transmitting resource coordination information needs to receive CI-PSFCH(s) from another terminal at the same time, the simultaneous transmission and reception may or may not be possible according to capability of the UE-A. When the simultaneous transmission and reception is impossible, the UE-A may selectively perform a transmission or reception operation in consideration of the priority(ies) of the CI-PSFCH(s) to be transmitted and the priority(ies) of the CI-PSFCH(s) to be received. From the perspective of one terminal, a transmission or reception operation needs to be determined by considering CI-PSFCH(s) for transmitting/receiving resource coordination information and AN-PSFCH(s) for transmitting/receiving HARQ ACK/NACK. Hereinafter, operations of the terminal according to each case will be described.
- CI-PSFCH(s) transmission & AN-PSFCH(s) transmission: AN-PSFCH(s) may always have a higher priority than CI-PSFCH(s). The terminal (e.g., UE-A) may preferentially perform a transmission operation of AN-PSFCH(s). Alternatively, without distinguishing between AN-PSFCH(s) and CI-PSFCH(s), the terminal (e.g., UE-A) may compare priority(ies) of AN-PSFCH(s) to be transmitted and priority(ies) of CI-PSFCH(s) to be transmitted, and preferentially transmit PSFCH(s) having higher priory(ies). In this case, the maximum number of transmittable PSFCHs may be preconfigured by system information or UE-specific RRC signaling, and the number may be additionally limited according to the transmission power of the terminal.
- CI-PSFCH(s) transmission & AN-PSFCH(s) reception: In case of a terminal incapable of simultaneous transmission and reception, reception of AN-PSFCH(s) may always have a higher priority than transmission of CI-PSFCH(s). Accordingly, the terminal (e.g., UE-A) may preferentially perform a reception operation of AN-PSFCH(s). Alternatively, based on a result of comparing the highest priority among priority(ies) of CI-PSFCH (s) to be transmitted and the highest priority among priority(ies) of AN-PSFCH (s) to be received, the terminal (e.g., UE-A) may selectively perform a transmission or reception operation according to a higher priority. In this case, if the highest priorities are identical to each other, comparison of the next highest priorities may be sequentially performed.
- CI-PSFCH(s) reception & AN-PSFCH(s) transmission: In case of a terminal incapable of simultaneous transmission and reception, transmission of AN-PSFCH(s) may always have a higher priority than reception of CI-PSFCH(s). Accordingly, the terminal (e.g., UE-A) may preferentially perform a transmission operation of AN-PSFCH(s). Alternatively, based on a result of comparing the highest priority among priority(ies) of CI-PSFCH (s) to be received with the highest priority among priority(ies) of AN-PSFCH(s) to be transmitted, the terminal (e.g., UE-A) may selectively perform a transmission or reception operation according to a higher priority. In this case, if the highest priorities are identical to each other, comparison of the next highest priorities may be sequentially performed.
- CI-PSFCH(s) reception & AN-PSFCH(s) reception: When the number of PSFCHs that can be simultaneously received and processed by the terminal is preconfigured according to capability of the terminal, the terminal (e.g., UE-B) may assume that AN-PSFCH (s) always have a higher priority than CI-PSFCH(s), and may preferentially perform a reception operation of AN-PSFCH(s). Alternatively, without distinguishing between AN-PSFCH(s) and CI-PSFCH(s), the terminal (e.g., UE-B) may compare priority(ies) of AN-PSFCH(s) to be received and priority(ies) of CI-PSFCH(s) to be received, and preferentially transmit PSFCHs having higher priorities.

As described above, whether AN-PSFCH(s) always have a higher priority than CI-PSFCH(s), or whether to preferentially perform a transmission or reception operation for a higher priority without distinction between CI-PSFCH(s) and AN-PSFCH(s) may be configured through system information, UE-specific RRC signaling, or MAC CE.

If AN-PSFCH(s) always have a higher priority than CI-PSFCH(s) in the above-described procedure, confusion may occur when considering priorities with channels other than PSFCH(s). For example, it may be assumed that priorities of a plurality of channels are configured in an order of `CI-PSFCH > CH #A (i.e., any channel except PSFCH) > AN-PSFCH'. In this case, if the priority of the AN-PSFCH and the priority of the CH #A are compared first, the CH #A may be selected. Then, if the priority of the CH #A and the priority of the CI-PSFCH are compared, the CI-PSFCH may be finally selected. However, if the priority of the AN-PSFCH and the priority of the CI-PSFCH are first compared, the AN-PSFCH may always be selected regardless of actual priorities. Then, if the priority of the AN-PSFCH and the priority of the CH #A are compared, the CH #A may be finally selected. Accordingly, the finally selected channel may vary depending on priorities of which channels are compared first. Accordingly, priorities between PSFCHs may be preferentially compared to prevent such the confusion. That is, after comparing the priorities of the CI-PSFCH and the AN-PSFCH first, priorities of other channels may be compared. In addition, when there are a plurality of CI-PSFCH(s) and a plurality of AN-PSFCH(s), priorities of PSFCHs of the same type may be first compared. That is, the priorities of the plurality of CI-PSFCH(s) are compared, and the priorities of the plurality of AN-PSFCH(s) are compared. Then, the priorities between the selected PSFCHs (i.e., CI-PSFCH and AN-PSFCH) may be compared, and then may be compared to priorities of other channels.

Meanwhile, it is required to define an operation when transmission/reception of CI-PSFCH(s) occurs simultaneously with LTE sidelink transmission/reception and uplink transmission. As an exemplary embodiment, even when transmission/reception of CI-PSFCH(s) occurs simultaneously with LTE sidelink transmission/reception and uplink transmission, the conventional scheme applied when transmission/reception of AN-PSFCH(s) occurs simultaneously with LTE sidelink transmission/reception and uplink transmission may be applied as it is. In addition, when transmission/reception of CI-PSFCH(s) and transmission/reception of AN-PSFCH(s) occur simultaneously with LTE sidelink transmission/reception and uplink transmission, priorities between CI-PSFCH(s) and AN-PSFCH(s) may be considered first, and the priority compared to the LTE sidelink transmission/reception and uplink transmission may be considered.

In Scheme 2, when there are two or more terminals that cause a collision in a specific resource, the UE-A may select a specific terminal among the plurality of terminals as the UE-B and transmit collision-related information. In this case, the specific terminal to which the collision-related information is transmitted among the terminals causing the collision may be preconfigured as the UE-B. This may be performed in a link establishment process through PC5-RRC signaling between the UE-A and the specific terminal (i.e., UE-B). As another method, after a plurality of terminals that cause a collision may be configured in pairs each comprising two terminals, a terminal with a lower priority (i.e., higher priority value) in each pair may be configured as the UE-B, and collision prediction information may be transmitted to the UE-B. For example, when terminals UE#1, UE#2, and UE#3 are predicted to cause a collision in an overlapped resource, a pair #1 {UE#1, UE#2}, a pair #2 {UE# 1, UE#3}, and a pair #3 {UE#2, UE#3} may be configured. If the terminals UE#1, UE#2, and UE#3 have priorities in an order of 'UE#1 > UE#2 > UE#3' (i.e., a priority value of UE#1 < a priority value of UE#2 < a priority value of UE#3), the terminal UE#2 may be selected from the pair #1, the terminal UE#3 may be selected from the pair #2, the terminal UE#3 may be selected from the pair #3, and the UE-A may select the terminals UE#2 and UE#3 as UE-Bs and transmit collision prediction information to them. As described above, when the UE-A needs to transmit collision prediction information to a plurality of UE-Bs (e.g., UE#2 and UE#3) through CI-PSFCHs, if the number of CI-PSFCHs that the UE-A can transmit is limited, the UE-A may perform an additional UE-B selection process to satisfy the limited number. More specifically, the UE-A may transmit CI-PSFCH(s) by selecting terminal(s) having a lower priority among the plurality of UE-Bs. In the above example, when transmission is possible to only one terminal among the terminals UE#2 and UE#3, the UE-A may finally select the terminal UE#3 as the UE-B and transmit the CI-PSFCH to the terminal UE#3. When the plurality of terminals (e.g., UE#2 and UE#3) have the same priority, the UE-A may implementally select an arbitrary terminal. Alternatively, when the plurality of terminals (e.g., UE#2 and UE#3) have the same priority, the UE-A may select the UE-B based on measured RSRPs. In this case, a terminal with a large RSRP or a terminal with a small RSRP may be configured to be selected as the UE-B. In addition, the UE-B may be selected according to various criteria preconfigured, such as the size of data or the size of a resource region in which a collision is predicted. If a terminal selected according to the above criteria does not support Scheme 2, the UE-A may not transmit resource coordination information (i.e., collision prediction information) to the selected terminal, or may select a terminal having the next lower priority as the UE-B and transmit resource coordination information (i.e., collision prediction information) to the selected terminal if the selected terminal supports Scheme 2. In the above example, if the terminal UE#3 does not support Scheme 2, the UE-A may not transmit the CI-PSFCH to the UE #3, or select the terminal UE#2 as the UE-B and transmit the CI-PSFCH to the terminal UE#2.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. An operation method of a first terminal performing sidelink communication, the operation method comprising:
receiving resource coordination information from a second terminal;
in response to that the resource coordination information is information on preferred resource(s), selecting a candidate resource to be used for transmission of the first terminal by preferentially considering the preferred resource(s); and
in response to that the resource coordination information is information on non-preferred resource(s), excluding the non-preferred resource(s) from a candidate resource to be used for transmission of the first terminal.

2. The operation method according to claim 1, wherein the second terminal is a terminal to receive data transmitted by the first terminal.

3. The operation method according to claim 1, wherein the resource coordination information is received through a medium access control (MAC) control element (CE) or received through a MAC CE and sidelink control information (SCI).

4. The operation method according to claim 3, wherein whether the resource coordination information is received through a MAC CE or received through a MAC CE and SCI is configured for each resource pool.

5. The operation method according to claim 3, wherein the resource coordination information includes N time resource indication value (TRIV)/frequency resource indication value (FRIV) combination(s), and each of the N TRIV/FRIV combination(s) indicates M resource(s), each of N and M being a natural number equal to or greater than 1.

6. The operation method according to claim 5, wherein a time position and a frequency position of a first resource among M resource(s) indicated by each of the N TRIV/FRIV combination(s) are further included in the resource coordination information.

7. The operation method according to claim 6, wherein the frequency position of the first resource is indicated by a starting subchannel index.

8. The operation method according to claim 6, wherein a time position of a first resource among M resource(s) indicated by a first TRIV/FRIV combination among the N TRIV/FRIV combination(s) is indicated as a reference slot, and time position(s) of first resource(s) of remaining TRIV/FRIV combination(s) other than the first TRIV/FRIV combination are indicated by slot offset(s) with respect to the reference slot.

9. The operation method according to claim 5, wherein a range of resource(s) indicated by the N TRIV/FRIV combination(s) when the resource coordination information is received through a MAC CE is different from a range of resource(s) indicated by the N TRIV/FRIV combination(s) when the resource coordination information is received through a MAC CE and SCI.

10. The operation method according to claim 1, wherein the resource coordination information is received from the second terminal based on an explicit request of the first terminal, or received from the second terminal according to satisfaction of a predetermined condition without an explicit request of the first terminal.

11. An operation method of a second terminal performing sidelink communication, the operation method comprising:
generating resource coordination information that is information on preferred resource(s) or non-preferred resource(s) for transmission of a first terminal; and
transmitting the resource coordination information to the first terminal,
wherein when the resource coordination information is information on preferred resource(s), a candidate resource to be used for transmission of the first terminal is selected by preferentially considering the preferred resource(s), and when the resource coordination information is information on non-preferred resource(s), the non-preferred resource(s) are excluded from a candidate resource to be used for transmission of the first terminal.

12. The operation method according to claim 11, wherein the resource coordination information is transmitted through a medium access control (MAC) control element (CE) or transmitted through a MAC CE and sidelink control information (SCI).

13. The operation method according to claim 12, wherein whether the resource coordination information is transmitted through a MAC CE or transmitted through a MAC CE and SCI is configured for each resource pool.

14. The operation method according to claim 13, wherein the resource coordination information includes N time resource indication value (TRIV)/frequency resource indication value (FRIV) combination(s), and each of the N TRIV/FRIV combination(s) indicates M resource(s), each of N and M being a natural number equal to or greater than 1.

15. The operation method according to claim 14, wherein a time position and a frequency position of a first resource among M resource(s) indicated by each of the N TRIV/FRIV combination(s) are further included in the resource coordination information.

16. The operation method according to claim 14, wherein a time position of a first resource among M resource(s) indicated by a first TRIV/FRIV combination among the N TRIV/FRIV combination(s) is indicated as a reference slot, and time position(s) of first resource(s) of remaining TRIV/FRIV combination(s) other than the first TRIV/FRIV combination are indicated by slot offset(s) with respect to the reference slot.

17. The operation method according to claim 14, wherein a range of resource(s) indicated by the N TRIV/FRIV combination(s) when the resource coordination information is received through a MAC CE is different from a range of resource(s) indicated by the N TRIV/FRIV combination(s) when the resource coordination information is received through a MAC CE and SCI.

18. A first terminal performing sidelink communication, comprising:
at least one transceiver; and
a processor controlling the at least one transceiver,
wherein the processor causes the first terminal to perform:
receiving resource coordination information from a second terminal by using the transceiver;
in response to that the resource coordination information is information on preferred resource(s), selecting a candidate resource to be used for transmission of the first terminal by preferentially considering the preferred resource(s); and
in response to that the resource coordination information is information on non-preferred resource(s), excluding the non-preferred resource(s) from a candidate resource to be used for transmission of the first terminal.

19. The first terminal according to claim 18, wherein the resource coordination information includes N time resource indication value (TRIV)/frequency resource indication value (FRIV) combination(s), and each of the N TRIV/FRIV combination(s) indicates M resource(s), each of N and M being a natural number equal to or greater than 1.

20. The first terminal according to claim 19, wherein a range of resource(s) indicated by the N TRIV/FRIV combination(s) when the resource coordination information is received through a MAC CE is different from a range of resource(s) indicated by the N TRIV/FRIV combination(s) when the resource coordination information is received through a MAC CE and SCI.
